(19) Europäisches Patentamt / European Patent Office / Office européen des brevets

(11) **EP 4 133 663 B1**

(12) **EUROPEAN PATENT SPECIFICATION**

(45) Date of publication and mention
of the grant of the patent:
**20.11.2024 Bulletin 2024/47**

(21) Application number: **21719286.3**

(22) Date of filing: **12.04.2021**

(51) International Patent Classification (IPC):
**H04L 5/00** *(2006.01)*

(52) Cooperative Patent Classification (CPC):
**H04L 5/0051; H04L 5/005;** H04L 5/0091;
Y02D 30/70

(86) International application number:
**PCT/IB2021/053009**

(87) International publication number:
**WO 2021/205415 (14.10.2021 Gazette 2021/41)**

(54) **METHODS OF COMPACT TRS CONFIGURATION FOR NR UE**

VERFAHREN ZUR KOMPAKTEN TRS-KONFIGURATION FÜR NR-UE

PROCÉDÉS DE CONFIGURATION DE TRS COMPACT POUR UNE UE NR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.04.2020 US 202063008383 P**

(43) Date of publication of application:
**15.02.2023 Bulletin 2023/07**

(73) Proprietor: **Telefonaktiebolaget LM Ericsson
(publ)
164 83 Stockholm (SE)**

(72) Inventors:
• **MALEKI, Sina
214 22 Malmö (SE)**
• **NADER, Ali
212 42 Malmö (SE)**
• **NIMBALKER, Ajit
Fremont, California 94538 (US)**
• **TIDESTAV, Claes
746 31 Bålsta (SE)**

(74) Representative: **Ericsson
Patent Development
Torshamnsgatan 21-23
164 80 Stockholm (SE)**

(56) References cited:
CN-A- 110 690 947    CN-A- 110 690 947
US-A1- 2018 234 197    US-A1- 2018 234 197

• **SPREADTRUM COMMUNICATIONS: "Remaining
issues on TRS", vol. RAN WG1, no. Prague, CZ;
20171009 - 20171013, 2 October 2017
(2017-10-02), XP051352285, Retrieved from the
Internet
<URL:http://www.3gpp.org/ftp/tsg_ran/WG1_RL
1/TSGR1_90b/Docs/> [retrieved on 20171002]**
• **ERICSSON: "Provisioning of TRS occasions to
Idle/Inactive UEs", vol. RAN WG1, no. e-Meeting;
20210125 - 20210205, 19 January 2021
(2021-01-19), XP051971721, Retrieved from the
Internet
<URL:https://ftp.3gpp.org/tsg_ran/WG1_RL1/TS
GR1_104-e/Docs/R1-2101556.zip R1-2101556
Provisioning of TRS occasions to Idle-Inactive
UEs.docx> [retrieved on 20210119]**
• **SPREADTRUM COMMUNICATIONS: "Remaining
issues on TRS", vol. RAN WG1, no. Prague, CZ;
20171009 - 20171013, 2 October 2017
(2017-10-02), XP051352285, Retrieved from the
Internet
<URL:http://www.3gpp.org/ftp/tsg_ran/WG1_RL
1/TSGR1_90b/Docs/> [retrieved on 20171002]**
• **ERICSSON: "Provisioning of TRS occasions to
Idle/Inactive UEs", vol. RAN WG1, no. e-Meeting;
20210125 - 20210205, 19 January 2021
(2021-01-19), XP051971721, Retrieved from the
Internet
<URL:https://ftp.3gpp.org/tsg_ran/WG1_RL1/TS
GR1_104-e/Docs/R1-2101556.zip R1-2101556
Provisioning of TRS occasions to Idle-Inactive
UEs.docx> [retrieved on 20210119]**

**Description**

<u>Related Applications</u>

This application claims the benefit of United States Provisional Patent Application No. 63/008,383, filed April 10, 2020.

<u>Technical Field</u>

The present disclosure is related to Tracking Reference Signal (TRS) configuration in wireless communication systems.

<u>Background</u>

The Third Generation Partnership Project (3GPP) is defining technical specifications for New Radio (NR) (e.g., Fifth Generation (5G)). In Release 15 (Rel-15) NR, a User Equipment (UE) can be configured with up to four carrier Bandwidth (BW) Parts (BWPs) in the Downlink (DL) with a single DL carrier BWP being active at a given time. A UE can be configured with up to four carrier BWPs in the Uplink (UL) with a single UL carrier BWP being active at a given time. If a UE is configured with a supplementary UL, the UE can additionally be configured with up to four carrier BWPs in the supplementary UL with a single supplementary UL carrier BWP being active at a given time.

For a carrier BWP with a given numerology $\mu_1$, a contiguous set of Physical Resource Blocks (PRBs) are defined and numbered from 0 to $N_{\mathrm{BWP},i}^{size} - 1$, where $i$ is the index of the carrier BWP. A Resource Block (RB) is defined as 12 consecutive subcarriers in the frequency domain.

Multiple Orthogonal Frequency-Division Multiplexing (OFDM) numerologies, $\mu$, are supported in NR as given by Table 1, where the subcarrier spacing, $\Delta f$, and the cyclic prefix for a carrier BWP are configured by different higher layer parameters for DL and UL, respectively.

**Table 1:** Supported transmission numerologies.

| $\mu$ | $\Delta f = 2^{\mu} * 15$ [kHz] | **Cyclic prefix** |
|---|---|---|
| 0 | 15 | Normal |
| 1 | 30 | Normal |
| 2 | 60 | Normal, Extended |
| 3 | 120 | Normal |
| 4 | 240 | Normal |

Physical channels

A DL physical channel corresponds to a set of resource elements carrying information originating from higher layers. The following DL physical channels are defined:

- Physical DL Shared Channel (PDSCH)
- Physical Broadcast Channel (PBCH)
- Physical DL Control Channel (PDCCH)

PDSCH is the main physical channel used for unicast DL data transmission, but also for transmission of Random Access Response (RAR), certain system information blocks, and paging information. PBCH carries the basic system information, required by the UE to access the network. PDCCH is used for transmitting DL Control Information (DCI), mainly scheduling decisions, required for reception of PDSCH, and for UL scheduling grants enabling transmission on PUSCH .

An UL physical channel corresponds to a set of resource elements carrying information originating from higher layers. The following UL physical channels are defined:

- Physical UL Shared Channel (PUSCH)

- Physical UL Control Channel (PUCCH)
- Physical Random Access Channel (PRACH)

PUSCH is the UL counterpart to the PDSCH. PUCCH is used by UEs to transmit UL control information, including HARQ acknowledgements, channel state information reports, etc. PRACH is used for random access preamble transmission.

*NR Reference Symbols*

The ultra-lean design principle in NR aims to minimize the always-on transmissions that exist in earlier systems (e.g., Long Term Evolution (LTE) Cell-Specific Reference Signal (CRS) reference symbols). Instead, NR provides reference symbols such as Synchronization Signal (SS) Blocks (SSBs) on a periodic basis, by default once every 20 milliseconds (ms). In addition, for connected mode UEs, typically a set of reference symbols are provided for optimal link performance. Some of these reference symbols are clarified below.

Channel State Information Reference Signal (CSI-RS) for tracking

A UE in Radio Resource Control (RRC) connected mode is expected to receive from the network the RRC layer UE specific configuration of a *NZP-CSI-RS-ResourceSet* configured including the parameter *trs-Info* (e.g., a parameter for a Tracking Reference Signal (TRS)). For a *NZP-CSI-RS-ResourceSet* configured with the higher layer parameter *trs-Info* set to "true", the UE shall assume the antenna port with the same port index of the configured Non-Zero Power (NZP) CSI-RS resources in the *NZP-CSI-RS-ResourceSet* is the same.

- For Frequency Range 1 (FR1), the UE may be configured with one or more NZP CSI-RS set(s), where a *NZP-CSI-RS-ResourceSet* consists of four periodic NZP CSI-RS resources in two consecutive slots with two periodic NZP CSI-RS resources in each slot. If no two consecutive slots are indicated as DL slots by *tdd-UL-DL-Configuration-Common* or *tdd-UL-DL-ConfigDedicated,* then the UE may be configured with one or more NZP CSI-RS set(s), where a *NZP-CSI-RS-ResourceSet* consists of two periodic NZP CSI-RS resources in one slot.

- For Frequency Range 2 (FR2), the UE may be configured with one or more NZP CSI-RS set(s), where a *NZP-CSI-RS-ResourceSet* consists of two periodic CSI-RS resources in one slot or with a *NZP-CSI-RS-ResourceSet* of four periodic NZP CSI-RS resources in two consecutive slots with two periodic NZP CSI-RS resources in each slot.

A UE configured with *NZP-CSI-RS-ResourceSet*(s) configured with higher layer parameter *trs-Info* may have the CSI-RS resources configured as:

- Periodic, with the CSI-RS resources in the *NZP-CSI-RS-ResourceSet* configured with same periodicity, bandwidth and subcarrier location.
- Periodic CSI-RS resource in one set and aperiodic CSI-RS resources in a second set, with the aperiodic CSI-RS and periodic CSI-RS resource having the same bandwidth (with same RB location) and the aperiodic CSI-RS being 'QCL-Type-A' and 'QCL-TypeD', where applicable, with the periodic CSI-RS resources. For FR2, the UE does not expect that the scheduling offset between the last symbol of the PDCCH carrying the triggering DCI and the first symbol of the aperiodic CSI-RS resources is smaller than the UE reported *ThresholdSched-Offset.* The UE shall expect that the periodic CSI-RS resource set and aperiodic CSI-RS resource set are configured with the same number of CSI-RS resources and with the same number of CSI-RS resources in a slot. For the aperiodic CSI-RS resource set if triggered, and if the associated periodic CSI-RS resource set is configured with four periodic CSI-RS resources with two consecutive slots with two periodic CSI-RS resources in each slot, the higher layer parameter *aperiodicTriggeringOffset* indicates the triggering offset for the first slot for the first two CSI-RS resources in the set.

A UE does not expect to be configured with a *CSI-ReportConfig* that is linked to a *CSI-ResourceConfig* containing an *NZP-CSI-RS-ResourceSet* configured with *trs-Info* and with the *CSI-ReportConfig* configured with the higher layer parameter *timeRestrictionForChannelMeasurements* set to 'configured'.
A UE does not expect to be configured with a *CSI-ReportConfig* with the higher layer parameter *reportQuantity* set to other than 'none' for aperiodic NZP CSI-RS resource set configured with *trs-Info.*
A UE does not expect to be configured with a *CSI-ReportConfig* for periodic NZP CSI-RS resource set configured with *trs-Info.*
A UE does not expect to be configured with a *NZP-CSI-RS-ResourceSet* configured both with *trs-Info* and *repetition.*

Each CSI-RS resource, defined in Clause 7.4.1.5.3 of Technical Specification (TS) 38.211, is configured by the higher layer parameter *NZP-CSI-RS-Resource* with the following restrictions:

- The time-domain locations of the two CSI-RS resources in a slot, or of the four CSI-RS resources in two consecutive slots (which are the same across two consecutive slots), as defined by higher layer parameter *CSI-RS-resourceMapping,* is given by one of

    ○ $l \in \{4,8\}$, $l \in \{5,9\}$, or $l \in \{6,10\}$ for FR1 and FR2,
    ○ $l \in \{0,4\}$, $l \in \{1,5\}$, $l \in \{2,6\}$, $l \in \{3,7\}$, $l \in \{7,11\}$, $l \in \{8,12\}$ or $l \in \{9,13\}$ for FR2.

- A single port CSI-RS resource with density $\rho$ = 3 given by Table 7.4.1.5.3-1 from TS 38.211 and higher layer parameter density configured by *CSI-RS-ResourceMapping.*
- The bandwidth of the CSI-RS resource, as given by the higher layer parameter *freqBand* configured by *CSI-RS-ResourceMapping,* is the minimum of 52 and $N_{\mathrm{BWP},i}^{\mathrm{size}}$ RBs, or is equal to $N_{\mathrm{BWP},i}^{\mathrm{size}}$ RBs. For operation with shared spectrum channel access, *freqBand* configured by *CSI-RS-ResourceMapping,* is the minimum of 48 and $N_{\mathrm{BWP},i}^{\mathrm{size}}$ RBs, or is equal to $N_{\mathrm{BWP},i}^{\mathrm{size}}$ RBs.
- The UE is not expected to be configured with the periodicity of $2^{\mu} \times 10$ slots if the bandwidth of CSI-RS resource is larger than 52 RBs.
- The periodicity and slot offset for periodic NZP CSI-RS resources, as given by the higher layer parameter *periodicityAndOffset* configured by *NZP-CSI-RS-Resource,* is one of $2^{\mu}X_p$ slots where $X_p$ = 10, 20, 40, or 80 and where $\mu$ is defined in Clause 4.3 of TS 38.211.
- Same *powerControlOffset* and *powerControlOffsetSS* given by *NZP-CSI-RS-Resource* value across all resources.

NZP CSI-RS

The UE can be configured with one or more NZP CSI-RS resource set configuration(s) as indicated by the higher layer parameters *CSI-ResourceConfig,* and *NZP-CSI-RS-ResourceSet.* Each NZP CSI-RS resource set consists of $K \geq 1$ NZP CSI-RS resource(s).

The following parameters for which the UE shall assume non-zero transmission power for CSI-RS resource are configured via the higher layer parameter *NZP-CSI-RS-Resource, CSI-ResourceConfig,* and *NZP-CSI-RS-ResourceSet* for each CSI-RS resource configuration:

- *nzp-CSI-RS-ResourceId* determines CSI-RS resource configuration identity.
- *periodicityAndOffset* defines the CSI-RS periodicity and slot offset for periodic/semi-persistent CSI-RS. All the CSI-RS resources within one set are configured with the same periodicity, while the slot offset can be same or different for different CSI-RS resources.
- *resourceMapping* defines the number of ports, code division multiplexing (CDM)-type, and OFDM symbol and subcarrier occupancy of the CSI-RS resource within a slot that are given in Clause 7.4.1.5 of TS 38.211.
- *nrofPorts* in *resourceMapping* defines the number of CSI-RS ports, where the allowable values are given in Clause 7.4.1.5 of TS 38.211.
- *density* in *resourceMapping* defines CSI-RS frequency density of each CSI-RS port per PRB, and CSI-RS PRB offset in case of the density value of 1/2, where the allowable values are given in Clause 7.4.1.5 of TS 38.211. For density 1/2, the odd/even PRB allocation indicated in *density* is with respect to the Common Resource Block (CRB) grid.
- *cdm-Type* in *resourceMapping* defines CDM values and pattern, where the allowable values are given in Clause 7.4.1.5 of TS 38.211.
- *powerControlOffset* is the assumed ratio of PDSCH Energy Per Resource Element (EPRE) to NZP CSI-RS EPRE when UE derives CSI feedback and takes values in the range of [-8, 15] decibels (dB) with 1 dB step size.
- *powerControlOffsetSS* is the assumed ratio of NZP CSI-RS EPRE to Synchronization Signal (SS)/Physical Broadcast Channel (PBCH) block EPRE.
- *scramblingID* defines scrambling identification (ID) of CSI-RS with length of 10 bits.
- *BWP-Id* in *CSI-ResourceConfig* defines which BWP the configured CSI-RS is located in.
- *repetition* in *NZP-CSI-RS-ResourceSet* is associated with a CSI-RS resource set and defines whether UE can assume the CSI-RS resources within the NZP CSI-RS Resource Set are transmitted with the same DL spatial domain transmission filter or not as described in Clause 5.1.6.1.2 and can be configured only when the higher layer parameter *reportQuantity* associated with all the reporting settings linked with the CSI-RS resource set is set to 'cri-RSRP', 'cri-SINR' or 'none'.

- *qcl-InfoPeriodicCSI-RS* contains a reference to a *TCI-State* indicating Quasi Co-Location (QCL) source RS(s) and QCL type(s). If the *TCI-State* is configured with reference to an RS with 'QCL-TypeD' association, that RS may be an SS/PBCH block located in the same or different Component Carrier (CC)/DL BWP or a CSI-RS resource configured as periodic located in the same or different CC/DL BWP.

- *trs-Info* in *NZP-CSI-RS-ResourceSet* is associated with a CSI-RS resource set and for which the UE can assume that the antenna port with the same port index of the configured NZP CSI-RS resources in the *NZP-CSI-RS-ResourceSet* is the same as described in Clause 5.1.6.1.1 and can be configured when reporting setting is not configured or when the higher layer parameter *reportQuantity* associated with all the reporting settings linked with the CSI-RS resource set is set to 'none'.

All CSI-RS resources within one set are configured with same density and same *nrofPorts,* except for the NZP CSI-RS resources used for interference measurement. The UE expects that all the CSI-RS resources of a resource set are configured with the same starting RB and number of RBs and the same *cdm-type.*

The bandwidth and initial CRB index of a CSI-RS resource within a BWP, as defined in Clause 7.4.1.5 of TS 38.211, are determined based on the higher layer parameters *nrofRBs* and *startingRB,* respectively, within the *CSI-FrequencyOccupation* Information Element (IE) configured by the higher layer parameter *freqBand* within the *CSI-RS-ResourceMapping* IE. Both *nrofRBs* and *startingRB* are configured as integer multiples of 4 RBs, and the reference point for *startingRB* is CRB 0 on the CRB grid. If $\mathrm{startingRB} < \mathrm{N_{BWP}^{start}}$, the UE shall assume that the initial CRB index of the CSI-RS resource is $\mathrm{N_{initial\,RB}} = \mathrm{N_{BWP}^{start}}$, otherwise $\mathrm{N_{initial\,RB}} = \mathrm{startingRB}$. If $\mathrm{nrofRBs} > \mathrm{N_{BWP}^{size}} + \mathrm{N_{BWP}^{start}} - \mathrm{N_{initial\,RB}}$, the UE shall assume that the bandwidth of the CSI-RS resource is $\mathrm{N_{CSI-RS}^{BW}} = \mathrm{N_{BWP}^{size}} + \mathrm{N_{BWP}^{start}} - \mathrm{N_{initial\,RB}}$, otherwise $\mathrm{N_{CSI-RS}^{BW}} = \mathrm{nrofRBs}$. In all cases, the UE shall expect that $\mathrm{N_{CSI-RS}^{BW}} \geq \min(24, \mathrm{N_{BWP}^{size}})$.

*NZP-CSI-RS-Resource*

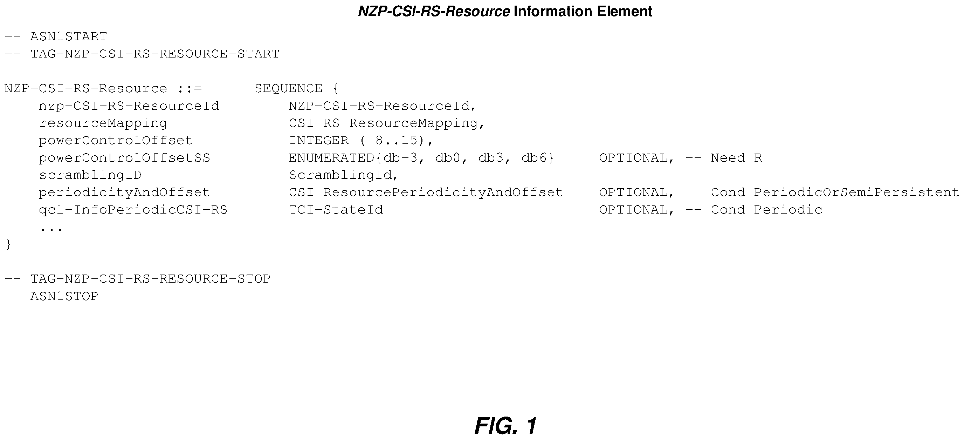

Figure 1 illustrates the *NZP-CSI-RS-Resource* IE. The *NZP-CSI-RS-Resource* IE is used to configure NZP CSI-RS transmitted in the cell where the IE is included, which the UE may be configured to measure on (see TS 38.214, clause 5.2.2.3.1). Fields for the *NZP-CSI-RS-Resource* IE are further described in Table 2 below.

**Table 2**

| NZP-CSI-RS-Resource field descriptions |
| --- |
| **periodicityAndOffset**<br>Periodicity and slot offset *sl1* corresponds to a periodicity of 1 slot, *sl2* to a periodicity of two slots, and so on. The corresponding offset is also given in number of slots (see TS 38.214, clause 5.2.2.3.1) |
| **powerControlOffset**<br>Power offset of PDSCH RE to NZP CSI-RS RE. Value in dB (see TS 38.214, clauses 5.2.2.3.1 and 4.1) |
| **powerControlOffsetSS**<br>Power offset of NZP CSI-RS RE to SS RE. Value in dB (see TS 38.214, clause 5.2.2.3.1) |
| **qcl-InfoPeriodicCSI-RS**<br>For a target periodic CSI-RS, contains a reference to one TCI-State in TCI-States for providing the QCL source and QCL type. For periodic CSI-RS, the source can be SSB or another periodic - CSI-RS. Refers to the TCI-State which has this value for tci-StateId and is defined in *tci-StatesToAddModList* in the *PDSCH-Config* included in the *BWP-Downlink* corresponding to the serving cell and to the DL BWP to which the resource belongs to (see TS 38.214, clause 5.2.2.3.1) |
| **resourceMapping**<br>OFDM symbol location(s) in a slot and subcarrier occupancy in a PRB of the CSI-RS resource |
| **scramblingID** |

(continued)

| NZP-CSI-RS-Resource field descriptions | |
|---|---|
| Scrambling ID (see TS 38.214, clause 5.2.2.3.1) | |
| | |
| **Conditional Presence** | **Explanation** |
| *Periodic* | The field is optionally present, Need M, for periodic NZP-CSI-RS-Resources (as indicated in CSI-ResourceConfig). The field is absent otherwise |
| *PeriodicOrSemiPersistent* | The field is mandatory present, Need M, for periodic and semi-persistent NZP-CSI-RS-Resources (as indicated in CSI-ResourceConfig). The field is absent otherwise. |

*NZP-CSI-RS-ResourceId*

Figure 2 illustrates the *NZP-CSI-RS-ResourceId* IE. The *NZP-CSI-RS-ResourceId* IE is used to identify one *NZP-CSI-RS-Resource.*

*NZP-CSI-RS-ResourceSet*

Figure 3 illustrates the *NZP-CSI-RS-ResourceSet* IE. The *NZP-CSI-RS-ResourceSet* IE is a set of NZP CSI-RS resources (their IDs) and set-specific parameters. Fields for the *NZP-CSI-RS-ResourceSet* IE are further described in Table 3 below.

**Table 3**

| NZP-CSI-RS-ResourceSet field descriptions |
|---|
| **aperiodicTriggeringOffset**<br>Offset X between the slot containing the DCI that triggers a set of aperiodic NZP CSI-RS resources and the slot in which the CSI-RS resource set is transmitted. The value 0 corresponds to 0 slots, value 1 corresponds to 1 slot, value 2 corresponds to 2 slots, value 3 corresponds to 3 slots, value 4 corresponds to 4 slots, value 5 corresponds to 16 slots, value 6 corresponds to 24 slots. When the field is absent the UE applies the value 0. |
| **nzp-CSI-RS-Resources**<br>NZP-CSI-RS-Resources associated with this NZP-CSI-RS resource set (see TS 38.214, clause 5.2). For CSI, there are at most 8 NZP CSI RS resources per resource set |
| **repetition**<br>Indicates whether repetition is on/off. If the field is set to 'OFF' or if the field is absent, the UE may not assume that the NZP-CSI-RS resources within the resource set are transmitted with the same downlink spatial domain transmission filter and with same NrofPorts in every symbol (see TS 38.214, clauses 5.2.2.3.1 and 5.1.6.1.2). Can only be configured for CSI-RS resource sets which are associated with CSI-ReportConfig with report of L1 RSRP or "no report" |
| **trs-Info**<br>Indicates that the antenna port for all NZP-CSI-RS resources in the CSI-RS resource set is same. If the field is absent or released the UE applies the value "false" (see TS 38.214, clause 5.2.2.3.1). |

*NZP-CSI RS-ResourceSetId*

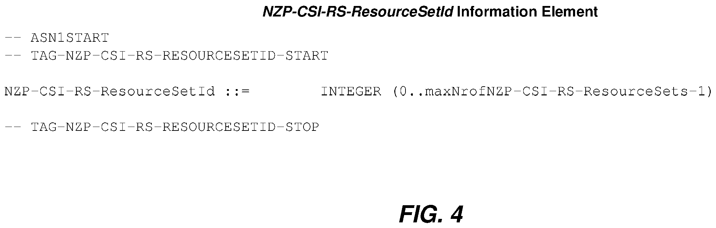

Figure 4 illustrates the *NZP-CSI-RS-ResourceSetId* IE. The *NZP-CSI-RS-ResourceSetId* IE is used to identify one *NZP-CSI-RS-ResourceSet.*

*CSI-ResourceConfig*

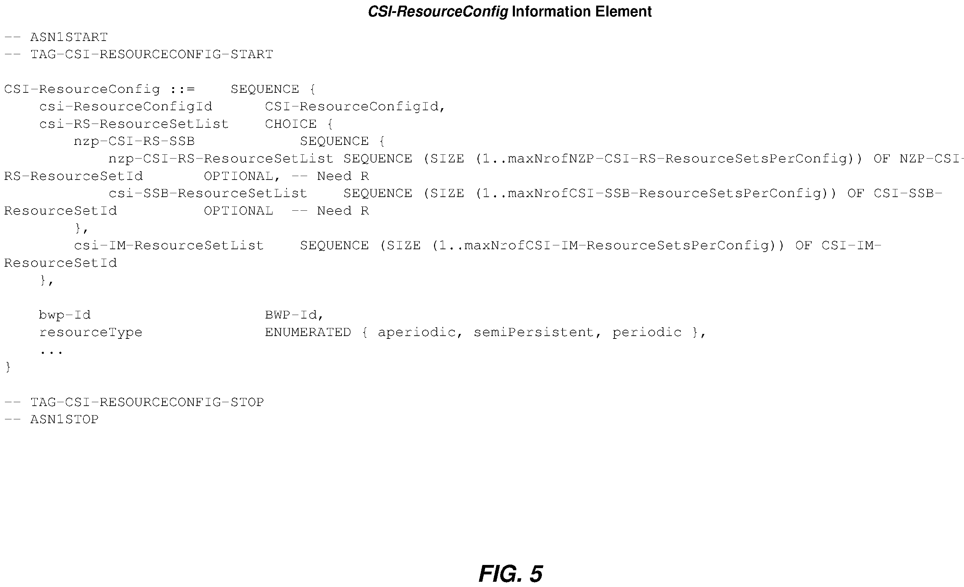

Figure 5 illustrates the *CSI-ResourceConfig* IE. The *CSI-ResourceConfig* IE defines a group of one or more *NZP-CSI-RS-ResourceSet, CSI-IM-ResourceSet* and/or *CSI-SSB-ResourceSet.* Fields for the *CSI-ResourceConfig* IE are further described in Table 4 below.

**Table 4**

| CSI-ResourceConfig field descriptions |
|---|
| **bwp-Id**<br>The DL BWP which the CSI-RS associated with this CSI-ResourceConfig are located in (see TS 38.214, clause 5.2.1.2 |
| **csi-ResourceConfigId**<br>Used in CSI-ReportConfig to refer to an instance of CSI-ResourceConfig |
| **csi-RS-ResourceSetList**<br>Contains up to maxNrofNZP-CSI-RS-ResourceSetsPerConfig resource sets if ResourceConfigType is 'aperiodic' and 1 otherwise (see TS 38.214, clause 5.2.1.2) |
| **csi-SSB-ResourceSetList**<br>List of SSB resources used for beam measurement and reporting in a resource set (see TS 38.214, section FFS_ Section) |
| **resource Type**<br>Time domain behavior of resource configuration (see TS 38.214, clause 5.2.1.2). It does not apply to resources provided in the csi-SSB-ResourceSetList. |

*CSI-ResourceConfigId*

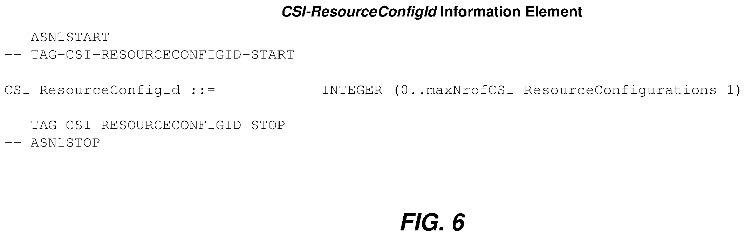

Figure 6 illustrates the *CSI-ResourceConfigId* IE. The *CSI-ResourceConfigId* IE is used to identify a *CSI-ResourceConfig.*

*CSI ResourcePeriodicityAndOffset*

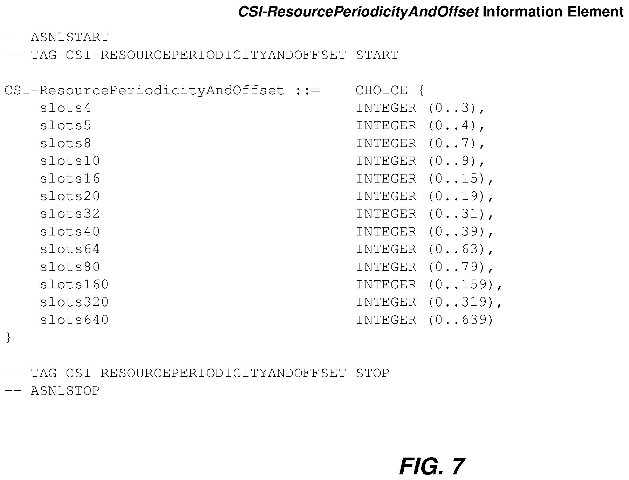

Figure 7 illustrates the *CSI-ResourcePeriodicityAndOffset* IE. The *CSI-ResourcePeriodicityAndOffset* IE is used to configure a periodicity and a corresponding offset for periodic and semi-persistent CSI resources, and for periodic and semi-persistent reporting on PUCCH. Both the periodicity and the offset are given in number of slots. The periodicity value slots4 corresponds to 4 slots, slots5 corresponds to 5 slots, and so on.

*CSI-RS-ResourceMapping*

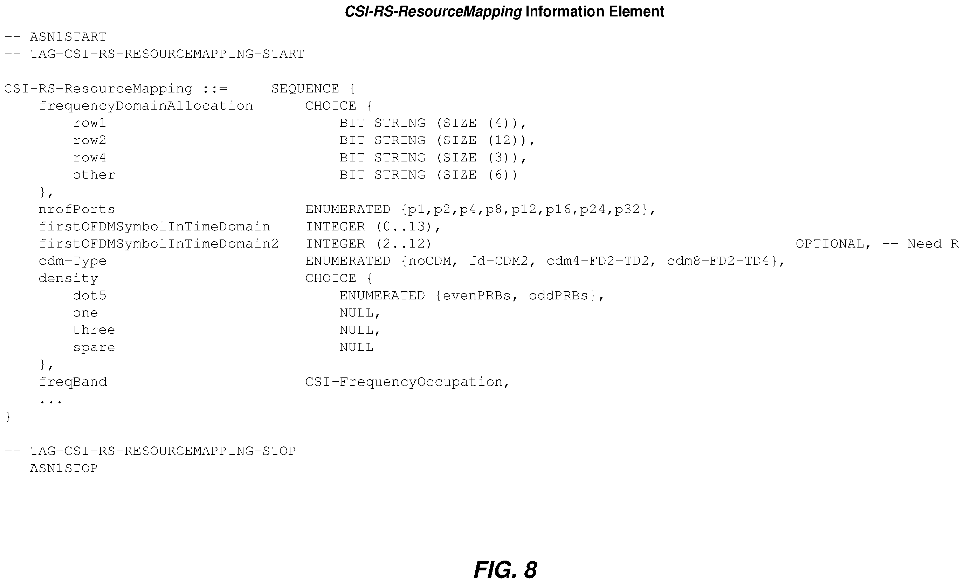

Figure 8 illustrates the *CSI-RS-ResourceMapping* IE. The *CSI-RS-ResourceMapping* IE is used to configure the resource element mapping of a CSI-RS resource in time- and frequency domain. Fields for the *CSI-RS-ResourceMapping* are further described in Table 5 below.

**Table 5**

| CSI-RS-ResourceMapping field descriptions |
|---|
| **cdm-Type**<br>CDM type (see TS 38.214, clause 5.2.2.3.1). |
| **density**<br>Density of CSI-RS resource measured in RE/port/PRB (see TS 38.211, clause 7.4.1.5.3).<br>Values 0.5 (*dot5*), 1 (one) and 3 (three) are allowed for X=1, values 0.5 (*dot5*) and 1 (one) are allowed for X=2, 16, 24 and 32, value 1 (one) is allowed for X=4, 8, 12.<br>For density = 1/2, includes 1-bit indication for RB level comb offset indicating whether odd or even RBs are occupied by CSI-RS. |
| **firstOFDMSymbolInTimeDomain2** |

(continued)

| CSI-RS-ResourceMapping field descriptions |
| --- |
| Time domain allocation within a physical resource block. See TS 38.211, clause 7.4.1.5.3. |
| **firstOFDMSymbolInTimeDomain** <br> Time domain allocation within a physical resource block. The field indicates the first OFDM symbol in the PRB used for CSI-RS. See TS 38.211, clause 7.4.1.5.3. Value 2 is supported only when DL-DMRS-typeA-pos equals 3. |
| **freqBand** <br> Wideband or partial band CSI-RS, (see TS 38.214, clause 5.2.2.3.1) |
| **frequencyDomainAllocation** <br> Frequency domain allocation within a physical resource block in accordance with TS 38.211, clause 7.4.1.5.3. The applicable row number in table 7.4.1.5.3-1 is determined by the frequencyDomainAllocation for rows 1, 2 and 4, and for other rows by matching the values in the column Ports, Density and CDMtype in table 7.4.1.5.3-1 with the values of nrofPorts, cdm-Type and density below and, when more than one row has the 3 values matching, by selecting the row where the column (k bar, 1 bar) in table 7.4.1.5.3-1 has indexes for k ranging from 0 to 2*n-1 where n is the number of bits set to 1 in frequencyDomainAllocation. |
| **nrofPorts** <br> Number of ports (see TS 38.214, clause 5.2.2.3.1) |

*CSI FrequencyOccupation*

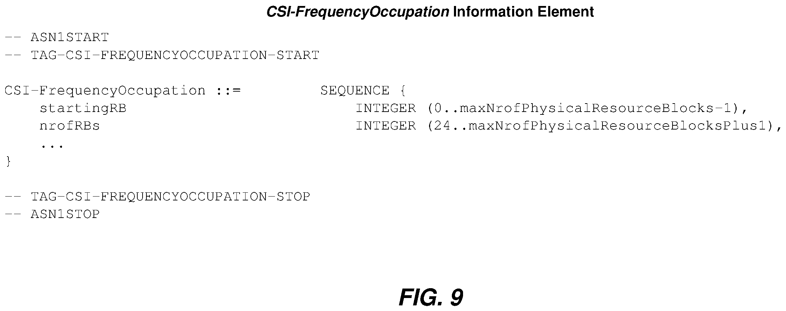

Figure 9 illustrates the *CSI-FrequencyOccupation* IE. The *CSI-FrequencyOccupation* IE is used to configure the frequency domain occupation of a channel state information measurement resource (e.g., *NZP-CSI-RS-Resource, CSI-IM-Resource*). Fields for the *CSI-FrequencyOccupation* IE are further described in Table 6 below.

**Table 6**

| CSI-FrequencyOccupation field descriptions |
| --- |
| **nrofRBs** <br> Number of PRBs across which this CSI resource spans. Only multiples of 4 are allowed. The smallest configurable number is the minimum of 24 and the width of the associated BWP. If the configured value is larger than the width of the corresponding BWP, the UE shall assume that the actual CSI-RS bandwidth is equal to the width of the BWP. |
| **startingRB** <br> PRB where this CSI resource starts in relation to common resource block #0 (CRB#0) on the common resource block grid. Only multiples of 4 are allowed (0, 4, ...) |

*Problems with Existing Solutions*

There currently exist certain challenge(s). In NR, in connected mode, a UE is provided either with periodic, semi-periodic or aperiodic CSI-RS/TRS (TRS or CSI RS for tracking) so it can measure the channel qualities, and/or track the reference signal in order to fine tune its time and frequency synchronization. Such RSs may also not be turned off despite some individual UEs may be in Idle/Inactive states. Nevertheless, the UE is not aware of the potential existence of such RSs during the RRC_Idle/Inactive. As such the UE conventionally relies on SSB signals during RRC_Idle/Inactive for, e.g., Automatic Gain Control (AGC) setting, synchronization, and/or cell quality measurements.

The problem with SSB measurements is that SSBs come in long time intervals (e.g., 20 ms) and sometimes the UE may need to stay out of deep sleep for an extended time before it is able to, e.g., read its paging message after the previous available SSB reception, which leads to a waste of UE energy.

Exposing CSI-RSs for tracking or TRSs that are available during RRC_Connected to RRC_Idle is considered as a solution to help the UE reduce the power consumption during RRC_Idle/Inactive. In particular, provision of such information via System Information (SI) (e.g., a SI Block (SIB), such as SIB1, SIB2, ... SIBn) is considered as a viable mechanism. Nevertheless, this involves a large overhead on the network side and also occupies a large part of the SI if the TRS configuration follows the same approach as Rel-15/16. In general, TRS configuration in the current versions of Rel-15/16 includes several parameters having configurations which are always the same. Nevertheless, TRS configuration needs to be explicitly configured, since it follows the same approach as other types of CSI-RSs for configuration.

Documents SPREADTRUM COMMUNICATIONS: "Remaining issues on TRS",3GPP DRAFT; R1-1717747_REMAINING ISSUES ON TRS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,vol. RAN WG1, no. Prague, CZ; 20171009 - 201710132 October 2017 (2017-10-02), CN 110 690 947 and US 2018/234197 represent relevant prior-ar.

Summary

Methods of compact Tracking Reference Signal (TRS) configuration for New Radio (NR) User Equipment (UE) are provided. The Channel State Information Reference Signal (CSI-RS) configuration framework through which the TRS is traditionally configured in connected mode is quite hefty in terms of number of possibilities and Information Elements (IEs) included in its structures. It entails IEs that can be used for configuration of multiple sets (up to 16) of both Zero Power (ZP) and Non-zero Power (NZP) CSI-RSs. Each of these sets can itself include configuration of up to 64 resources.

In order to be able to provide TRS configuration and availability information to the UEs in Radio Resource Control (RRC) Idle/Inactive states, a compact TRS mechanism is disclosed through which the network can configure the UE with specific TRSs. Further, this approach can indicate to the UE if the configured RS is applicable to all RRC states (e.g., connected, idle, or inactive), or to specific RRC states. Specifically, the present disclosure provides mechanisms with which different configuration parameters are needed to be set to configure the UE with a compact TRS. Furthermore, the disclosure provides methods and mechanisms with which the UE can communicate its capabilities or provide assistance information to the network, in order to configure the UE with a proper compact TRS.

In this regard, embodiments described herein provide UEs with a mechanism to be configured efficiently with a compact TRS. The compact TRS removes the redundant parts of a traditional TRS while providing flexibility for the network to further expose the TRS to idle UEs. Embodiments exploit the compact TRS to achieve power savings particularly during RRC_Idle/Inactive modes. Furthermore, the compact TRS significantly reduces the network overhead in configuring the TRS.

The present invention is defined by the attached independent claims. Other preferred embodiments may be found in the dependent claims.

Brief Description of the Drawings

The accompanying drawing figures incorporated in and forming a part of this specification illustrate several aspects of the disclosure, and together with the description serve to explain the principles of the disclosure.

Figure 1 illustrates a *NZP-CSI-RS-Resource* Information Element (IE).

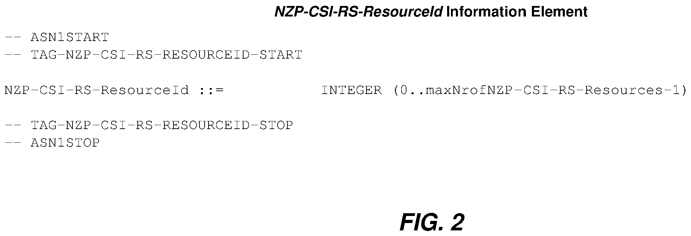

Figure 2 illustrates a *NZP-CSI-RS-ResourceId* IE.

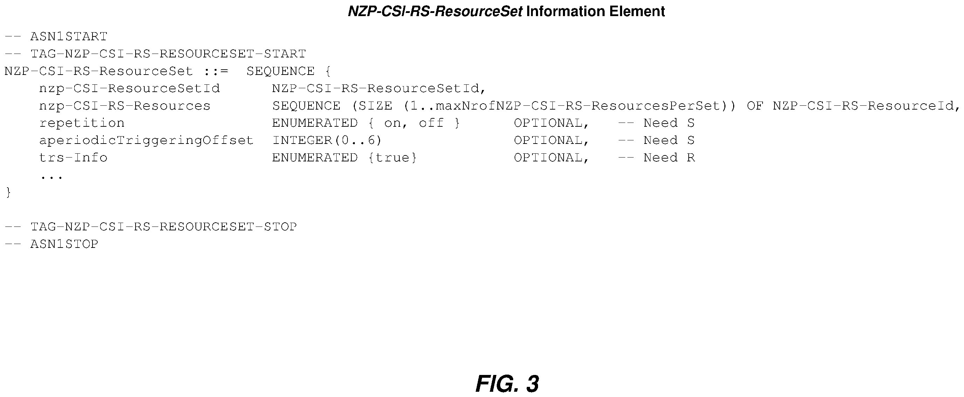

Figure 3 illustrates a *NZP-CSI-RS-ResourceSet* IE.
Figure 4 illustrates a *NZP-CSI-RS-ResourceSetId* IE.
Figure 5 illustrates a *CSI-ResourceConfig* IE.
Figure 6 illustrates a *CSI-ResourceConfigId* IE.
Figure 7 illustrates a *CSI-ResourcePeriodicityAndOffset* IE.
Figure 8 illustrates a *CSI-RS-ResourceMapping* IE.
Figure 9 illustrates a *CSI-FrequencyOccupation* IE.

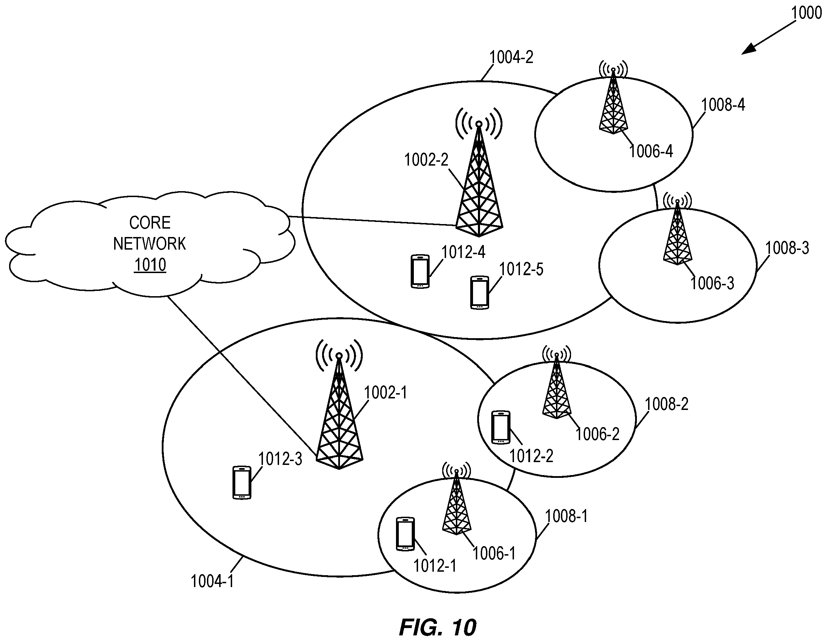

Figure 10 illustrates one example of a cellular communications system in which embodiments of the present disclosure may be implemented.

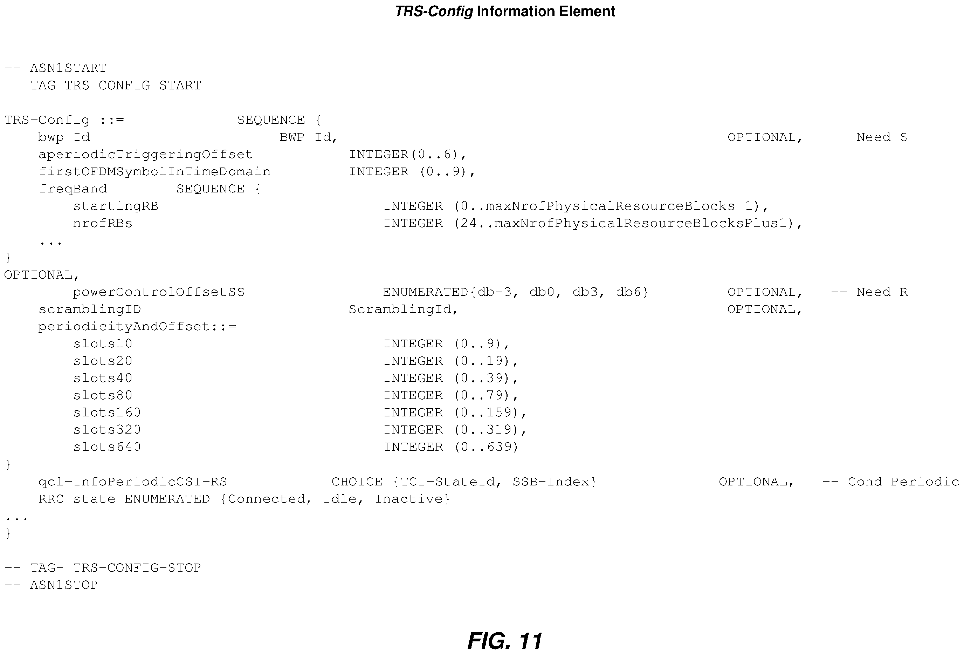

Figure 11 illustrates an example of a *TRS-Config* IE.

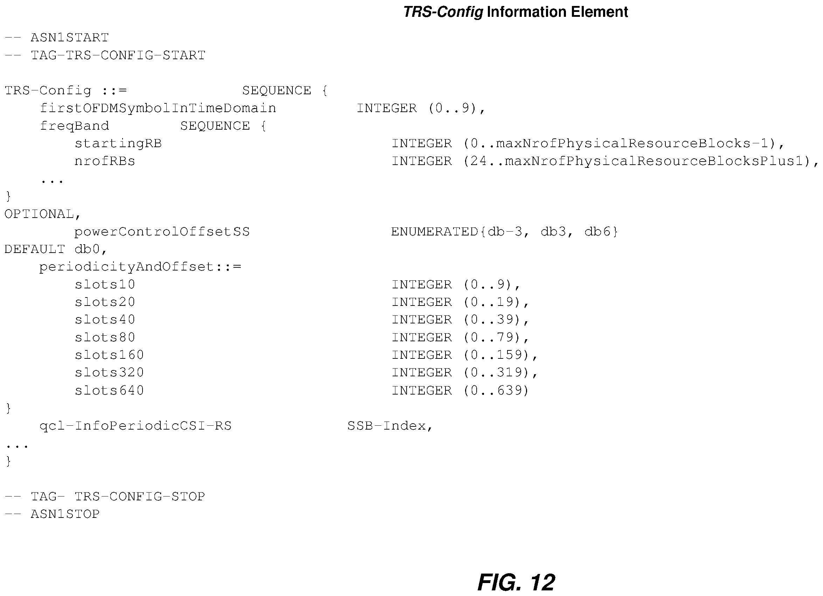

Figure 12 illustrates a more compact example of the *TRS-Config* IE when a Bandwidth Part (BWP) is the same as the initial BWP for a User Equipment (UE).

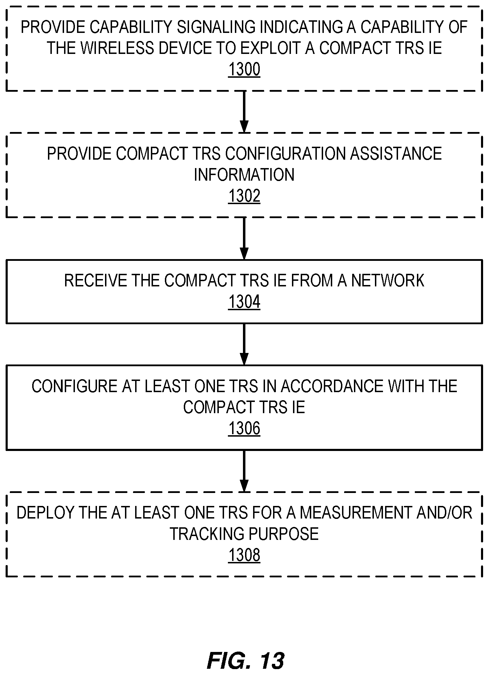

Figure 13 is a flowchart illustrating a method for compactly configuring a Tracking Reference Signal (TRS) in accordance with one embodiment.

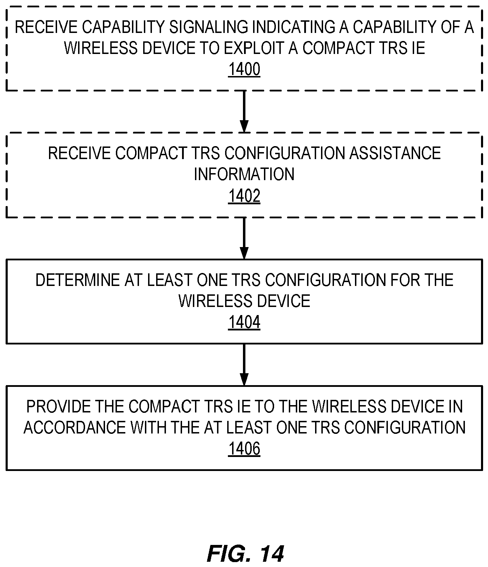

Figure 14 is a flowchart illustrating a method for providing a compact TRS configuration in accordance with one embodiment.

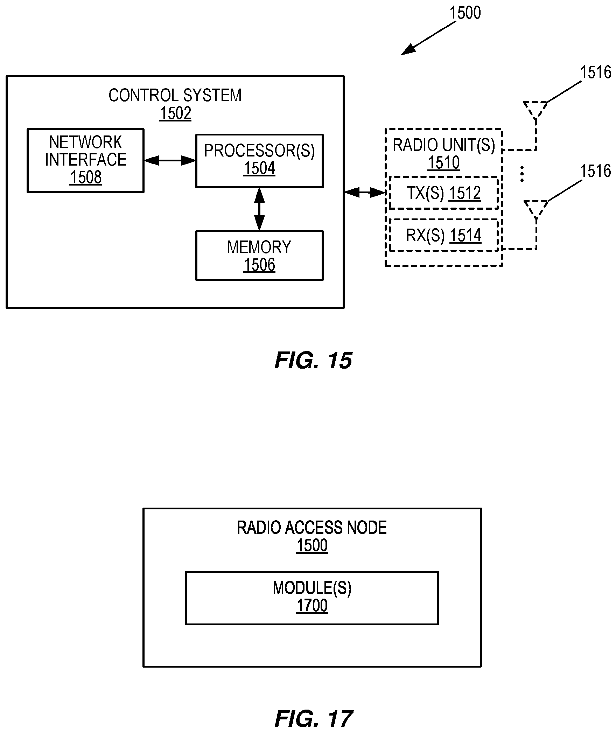

Figure 15 is a schematic block diagram of a network node according to some embodiments of the present disclosure.

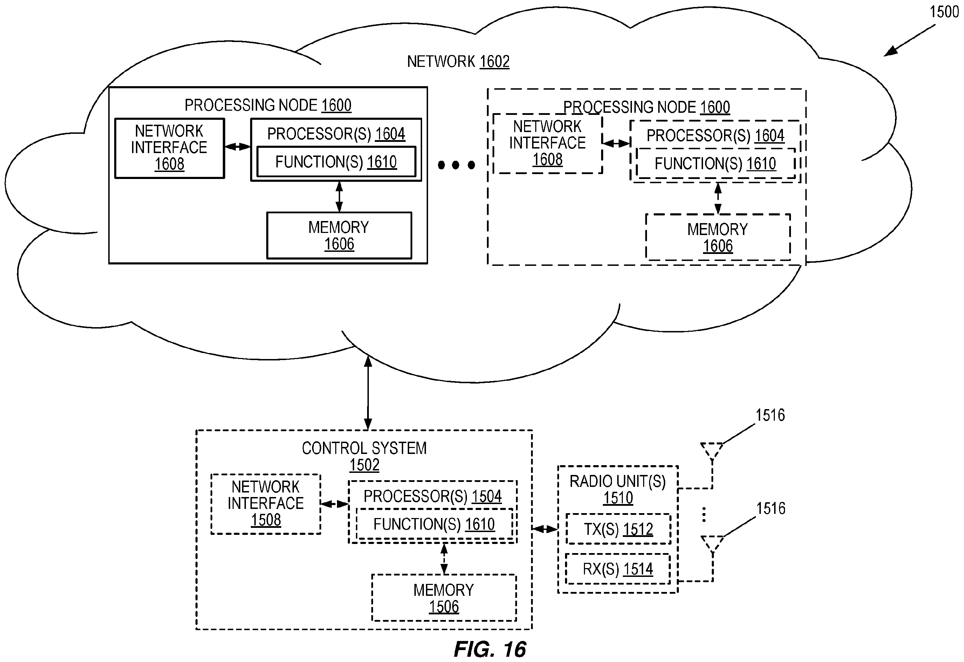

Figure 16 is a schematic block diagram that illustrates a virtualized embodiment of the network node according to some embodiments of the present disclosure.
Figure 17 is a schematic block diagram of the network node according to some other embodiments of the present disclosure.

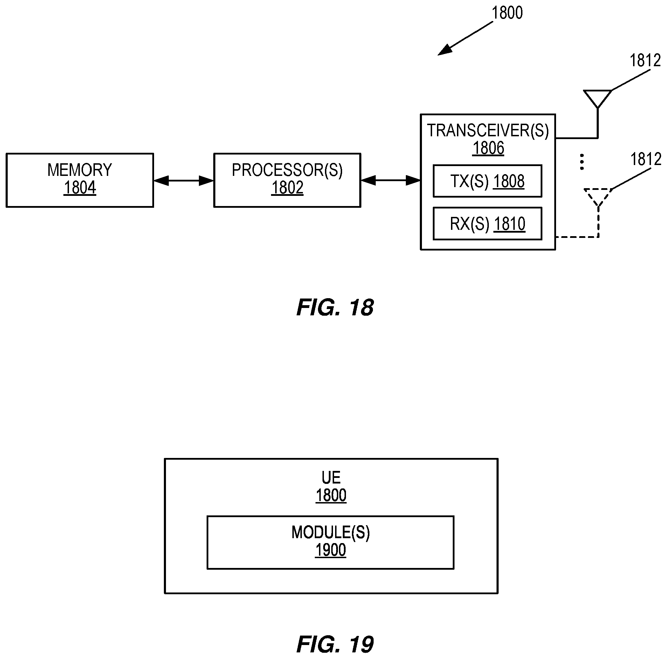

Figure 18 is a schematic block diagram of a wireless communication device according to some embodiments of the present disclosure.

Figure 19 is a schematic block diagram of the wireless communication device according to some other embodiments of the present disclosure.

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Management Function (AMF), a User Plane Function (UPF), a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the RAN or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

Figure 10 illustrates one example of a cellular communications system 1000 in which embodiments of the present disclosure may be implemented. In the embodiments described herein, the cellular communications system 1000 is a 5G System (5GS) including a NR RAN or LTE RAN (i.e., Evolved Universal Terrestrial Radio Access (E-UTRA) RAN) or an Evolved Packet System (EPS) including a LTE RAN. In this example, the RAN includes base stations 1002-1 and 1002-2, which in LTE are referred to as eNBs (when connected to Evolved Packet Core (EPC)) and in 5G NR are referred to as gNBs (e.g., LTE RAN nodes connected to 5G Core (5GC), which are referred to as gn-eNBs), controlling corresponding (macro) cells 1004-1 and 1004-2. The base stations 1002-1 and 1002-2 are generally referred to herein collectively as base stations 1002 and individually as base station 1002. Likewise, the (macro) cells 1004-1 and 1004-2 are generally referred to herein collectively as (macro) cells 1004 and individually as (macro) cell 1004. The RAN may also include a number of low power nodes 1006-1 through 1006-4 controlling corresponding small cells 1008-1 through 1008-4. The low power nodes 1006-1 through 1006-4 can be small base stations (such as pico or femto base stations) or Remote Radio Heads (RRHs), or the like. Notably, while not illustrated, one or more of the small cells 1008-1 through 1008-4 may alternatively be provided by the base stations 1002. The low power nodes 1006-1 through 1006-4 are generally referred to herein collectively as low power nodes 1006 and individually as low power node 1006. Likewise, the small cells 1008-1 through 1008-4 are generally referred to herein collectively as small cells 1008 and individually as small cell 1008. The cellular communications system 1000 also includes a core network 1010, which in the 5GS is referred to as the 5G Core (5GC). The base stations 1002 (and optionally the low power nodes 1006) are connected to the core network 1010.

The base stations 1002 and the low power nodes 1006 provide service to wireless communication devices 1012-1 through 1012-5 in the corresponding cells 1004 and 1008. The wireless communication devices 1012-1 through 1012-5 are generally referred to herein collectively as wireless communication devices 1012 and individually as wireless communication device 1012. In the following description, the wireless communication devices 1012 are oftentimes UEs, but the present disclosure is not limited thereto.

In embodiments described herein, methods and mechanisms are provided with which a network (e.g., a NR RAN of the cellular communications system 1000) can configure a UE (e.g., the wireless communication devices 1012) with one or multiple Tracking Resource Signals (TRSs) in a compact way. The underlying configuration can be performed through different mechanisms, such as a System Information (SI) update, Radio Resource Control (RRC) configuration, or RRC release command.

Furthermore, the compact TRS mechanisms described herein do not require reporting from the UE. For example, the UE can employ them for measurement and tracking purposes and do not need to provide feedback to the network.

### *Aspect 1: Compact TRS Configuration and Resource Mapping*

Configuring a UE with a compact TRS involves several parameters. In one example, a specific *NZP-CSI-RS-Resource* can be configured for compact TRS (e.g., a *TRS-config* Information Element (IE) which includes the most relevant fields from *CSI-RS-ResourceMapping* as well as *NZP-CSI-RS-Resourceset*). Below, example embodiments are described on how the relevant parameters can be configured in a compact way.

*NZP-CSI-RS-Resource IE:*

In one example, this IE can be simply called as a *CSI-RS-for-tracking-Resource* IE, or *TRS-config* IE clarifying that this is a compact TRS configuration.

*nzp-CSI- RS- ResourceId:*

In one example, this parameter does not need to be explicitly configured, particularly if the compact TRS IE is configured as an independent *NZP-CSI-RS-Resource* IE as described above.

In another example, the parameter can be simply called in a relation to compact TRS configuration, clarifying that this is different from other types of Channel State Information Reference Signal (CSI-RS) configuration (e.g., *TRS-config,* or compact CSI-RS for tracking and so on).

*resourceMapping:*

In one example, an independent *CSI-RS-ResourceMapping* IE for compact TRS can be configured. In another preferred approach, all the related resource mapping fields can be moved to the compact TRS IE.

*powerControlOffset:*

Power offset of Physical Downlink Shared Channel (PDSCH) Resource Element (RE) to Non-Zero Power (NZP) CSI-RS RE. In one example, this field is removed from compact TRS configuration, since the UE is not expected to report anything after receiving TRS.

Power control offset Synchronization Signal (SS):

Power control offset SS is the ratio of NZP CSI-RS Energy Per Resource Element (EPRE) to the Secondary Synch Signal of SS/ Physical Broadcast Channel (PBCH) block EPRE.

In one example, the ratio can be configured as 1 or 0 decibels (dB). In this case, in one approach the compact TRS may not include this IE indicating that the power control offset SS is configured as 1 to reduce the size. For example, if the compact TRS is present in idle mode, the network may wish to configure this parameter as 1 and thus do not explicitly configure it in compact TRS.

In another example, the value can be explicitly configured, or the value can be configured explicitly only when it is not 1. In yet another example, the UE may be configured differently for connected and idle modes (e.g., a higher or lower value for the connected mode, and 1 for idle mode).

Scrambling ID:

In one example, the scrambling ID of compact TRS can be configured in the same way as in Rel-15/16.

In another example, the scrambling ID of compact TRS can be associated with the RRC state (e.g., for connected mode a different ID can be employed with respect to the one used in the idle mode).

In one aspect, the scrambling ID can be the same or based on Cell identity; in this case the field of scrambling ID can be omitted.

Periodicity and Offset:

In one example, the compact TRS periodicity and offset is configured as in Rel-15/16, however, with a reduced number of possibilities (e.g., only the ones associated with periodicities of 10, 20, 40, or 80 ms or other values in terms of the number of slots). In another example, the periodicity can be configured explicitly from a set of values in terms of milliseconds (ms).

In another example, the compact TRS periodicity can be associated with a specific SS Block (SSB) periodicity, e.g., the same periodicity as SSB, or a fraction of SSB periodicity, or multiples of SSB periodicity. Furthermore, an offset indicator can indicate the offset between the compact TRS and SSB.

In another example, the compact TRS periodicity can be associated with a Paging Occasion (PO), or a number of POs. For example, the compact TRS periodicity may be configured to be every PO, or multiples of PO periodicity, or a fraction of it. Furthermore, an offset indicator can indicate the offset between the compact TRS and the PO.

In another example, the compact TRS periodicity can be associated with a Discontinuous Reception (DRX) cycle (e.g., Connected Mode DRX (C-DRX), Idle Mode DRX (I-DRX)), or a fraction of it, or multiple of it. Furthermore, an offset indicator can indicate the offset between the compact TRS and a specific part of the DRX cycle (e.g., the end of the cycle, the beginning of the cycle, or ON duration of C-DRX).

In another example, the compact TRS may be configured with separate periodicities for different RRC states. For example, the compact TRS periodicity may be shorter for connected mode, and longer for the idle mode, or vice-versa. Or it can be configured in a different way for the connected mode and idle mode. For example, the UE may be configured with a TRS of 40 ms periodicities for connected mode, but periodicity equivalence of a PO in idle mode.

*qcl-InfoPeriodicCSI-RS:*

This parameter typically contains a reference to a *TCI-State* indicating Quasi Co-Location (QCL) source Reference Signal(s) (RS(s)) and QCL type(s). In one example, the same procedure as in Rel-15/16 can be employed for compact TRS.

In another example, particularly when the compact TRS is configured as part of SI update, or that the compact TRS is employed during idle mode, the QCL information can be configured in association with one or more specific SSBs. That is, the UE is configured to receive TRS in the same QCLs which are configured for the associated SSBs. Hence, there might be several TRSs provided in the cell, each associated with one/several of the SSBs provided in the cell.

Conditional Presence:

In one example, this field remains in the same way as in Rel-15/16. That is, it can be present if the compact TRS configuration is periodic and absent if not or if there is also an aperiodic element (e.g., as in the case of Frequency Range 2 (FR2)).

In another example, this field is not configured at all in compact TRS, since there is a periodic element in all types of TRS configuration, and if the field *aperiodicTriggeringOffset* is also additionally configured, it indicates presence of the aperiodic element as well (e.g., as in the case of FR2).

In another example, this field can additionally indicate that the compact TRS configuration is applicable to which RRC states. For example, this field can indicate if the compact TRS configuration is applicable to both connected mode (e.g., RRC_Connected UEs) and idle mode UEs (e.g., RRC_Idle/Inactive UEs), or only applicable to connected mode UEs, or only applicable to an individual state or set of specific states. In a related realization, this part is only configured if the TRS configuration is applicable to Idle UEs as well, or in an alternative solution, if the field is absent, it is available to all RRC states. Furthermore, this field can also be configured with its different possibilities with regard to different RRC states as an independent field in compact TRS configuration IE.

*NZP-CSI-RS-ResourceSet IE:*

In one example, all the fields in this IE can be moved to the generic compact TRS configuration. Otherwise, it can become an independent compact TRS set configuration IE (e.g., *TRS-config-set* IE).

*nzp-CSI-RS-ResourceId:*

In one example, this parameter does not need to be explicitly configured, particularly if the compact TRS IE is configured as an independent *NZP-CSI-RS-Resource* IE as described above.

In another example, the parameter can be simply called in a relation to compact TRS configuration, clarifying that this is different from other types of CSI-RS configuration (e.g., *TRS-config,* or compact CSI-RS for tracking and so on).

*repetition:*

In one example, this field is removed and not configured for compact TRS configuration as there is no reporting expected for TRS.

*trs-Info:*

In one example, this field is not configured for compact TRS configuration, since it is clear that the configuration is related to TRS.

*aperiodicTriggeringOffset:*

In one example, this field is only configured if the compact TRS involves an aperiodic component as in the case of TRS for FR2. The configuration can be as in the case of Rel-15/16. If the field is not present, the UE assumes that all the parameters are periodic.

In case the compact TRS is only provided for idle UEs, the *aperiodicTriggeringOffset* is completely omitted for the structure pointed out in compact TRS configuration.

*bwp-Id:*

*bwp-Id* is currently configured as part of the *CSI-ResourceConfig* IE in Rel-15/16. In one example, the *bwp-Id* and Bandwidth (BW) related configurations can be moved under the compact TRS configuration IE. Another option is to make a specific compact TRS resource configuration, and include this field there. The following examples can be adapted to both possibilities.

In one example, the TRS is configured with a specific Bandwidth Part (BWP) among the ones which are configured for a specific cell. In such case, through a *bwp-Id,* the BWP (and associated subcarrier spacing) in which the TRS is provided is identified by the UE. In another example, particularly if the TRS is intended to be employed during idle mode, the UE can be configured with the same BWP as it is supposed to employ during idle mode. For example, the UE may be configured with the initial BWP during idle mode, and the same BWP can be configured for the compact TRS. As such, in one approach, the associated IE related to BWP configuration (e.g., *bwp-Id*) can remain optional, meaning if omitted the UE should assume the same BWP as idle mode for the TRS.

Similarly, the information about BW of the TRS available in a BWP can optionally be provided to the UE. The reason for the optionality of this IE is that typically the TRS is intended for wideband transmission and covers the whole BWP (e.g., 52 Resource Blocks (RBs) as described above). However, in case the initial BWP accommodates more than 52 RBs (e.g., 96 RBs in 15 KHz subcarrier spacing case) such optional indicator can be used to inform the UE whether the TRS covers the whole BWP (in this case 96 RBs) or only the default 52 RBs, or potentially an even smaller number of resource blocks (e.g., corresponding to SSB bandwidth).

Yet in another example, the UE may be configured with the same BWP or a subset of BWP for TRS which is configured for SSB. For example, an IE can be added to the compact TRS configuration related to BWP which indicates the BWP is associated with a specific SSB meaning it is the same BWP as the specific SSB.

UEs in Idle/Inactive mode may not need to operate on bandwidth larger than the bandwidth corresponding to initial BWP or the bandwidth of Coreset 0 (e.g., if there is no initial DL BWP). Thus, in yet another example, the UE may assume the TRS is transmitted in Physical RBs (PRBs) corresponding to a reference bandwidth or set of PRBs. The reference bandwidth can be the SSB bandwidth, the bandwidth corresponding to Coreset 0 or the bandwidth corresponding to initial BWP. In cases where the network may indicate an initial BWP in SI (e.g., a SI Block (SIB) such as SIB1), UEs in Idle/Inactive mode can assume that the TRS are present only in a subset of PRBs of the initial BWP - this subset of PRBs can be explicitly indicated via the BW field in the TRS configuration, or implicit indication (default can be the PRBs to the bandwidth corresponding to Coreset 0). This enables the network to keep the frequency span of the TRS to be as small as possible for the purpose of aiding the Idle/Inactive mode UEs. The frequency location and span of the TRS as well as the starting RB and the number of RBs can be provided as part of the configuration (e.g., in the element *freqBand* as part of an independent compact TRS resource mapping IE) or directly as part of the compact TRS configuration IE.

*CSI-RS-ResourceMapping:*

In one example, all the fields in this IE can be moved to the generic compact TRS configuration. Otherwise, it can become an independent compact TRS set resource mapping configuration IE (e.g., *TRS-config-ResourceMapping* IE).

*frequencyDomainAllocation:*

In one example, this field is not configured as part of compact TRS IE, or in another word is not included, since for TRS, it is always related to Rel-15/16 specifications associated with a case of no-Consolidated Data Model (CDM), number of ports 1 and density of 3 (e.g., row 1 of 3GPP Technical Specification TS 38.211 of Table 7.4.1.5.3-1).

Number of ports

In one example, the compact TRS does not include the number of ports, since TRS is only associated with one port, and it is the same among all the underlying RS resources.

*CDM-type:*

In one example, for compact TRS, there is no CDM and thus this line is not configured for the compact TRS. In other words, there is no need to consider *CDM-type* as part of the compact TRS configuration, and the UE by default assumes there is no CDM type configured.

*density:*

*density* defines CSI-RS frequency density of each CSI-RS port per PRB, and CSI-RS PRB offset in case of the density value of ½. For the compact TRS, in one example, the density is always the same, and determined by the specification (e.g., density of 3), and thus this field does not need to be explicitly configured for the compact TRS.

*firstOFDMSymbolInTimeDomain:*

When it comes to density in time, the TRS resources are always separated by 4 symbols and do not need to be signaled. However, the starting symbol in time indicated by firstOFDMSymbolInTimeDomain can be configured (e.g., it can be one of the values {4, 5, 6} for Frequency Range 1 (FR1) and FR2, or additional values for starting symbol can be included for FR2 {0,1,2,3,7,8,9}).

*freqBand:*

This parameter is responsible for determining the number of RBs as well as the starting RB.

Figures 11 and 12 provide examples of how a compact TRS configuration IE can appear, with its elements as described in Aspect 1. Figure 11 illustrates an example of the *TRS-Config* IE. Figure 12 illustrates a more compact example of the *TRS-Config* IE when the BWP is the same as the initial BWP for the UE.

***Aspect 2: UE capability signaling and assistance information for compact TRS***

In one example, the UE indicates to the network through capability signaling that it can support compact TRS. In another approach, the UE indicates to the network that it can exploit TRS for other purposes than tracking, such as to achieve power savings (e.g., in the idle mode).

The network then decides to configure or not the UE with a compact TRS as disclosed in Aspect 1.

In one example, the UE provides additional assistance information than just capability. For example, the UE provides preferences with regard to the underlaying parameters of compact TRS discussed in Aspect 1, or a subset of them. In a related realization, the UE may decide to even communicate a specific preferred compact TRS configuration or a set of specific TRS configurations.

The network can then decide to consider the UE preferences and configure the UE with one or more compact TRSs as such. In a related realization, particularly when the compact TRS is configured through SI, or when TRS is broadcasted to all the UEs, the network can consider the most common preferred parameter configurations from the UEs.

Figure 13 is a flowchart illustrating a method for compactly configuring a TRS in accordance with one embodiment. The method may be implemented in a wireless device. Optional steps are indicated with dashed lines. In optional step 1300, the wireless device provides capability signaling indicating a capability of the wireless device to exploit a compact TRS IE. In optional step 1302, the wireless device provides compact TRS configuration assistance information. In step 1304, the wireless device receives the compact TRS IE from a network. In an exemplary aspect, the compact TRS IE is received without a CSI-RS configuration. In step 1306, the wireless device configures at least one TRS in accordance with the compact TRS IE. In optional step 1308, the wireless device deploys the at least one TRS for a measurement and/or tracking purpose.

Figure 14 is a flowchart illustrating a method for providing a compact TRS configuration in accordance with one embodiment. The method may be implemented in a base station. Optional steps are indicated with dashed lines. In optional step 1400, the base station receives capability signaling indicating a capability of a wireless device to exploit a compact TRS IE. In optional step 1402, the base station receives compact TRS configuration assistance information. In step 1404, the base station determines at least one TRS configuration for the wireless device. In step 1406, the base station provides the compact TRS IE to the wireless device in accordance with the at least one TRS configuration. In an exemplary aspect, the compact TRS IE is provided without providing a CSI-RS configuration.

Figure 15 is a schematic block diagram of a network node 1500 according to some embodiments of the present disclosure. Optional features are represented by dashed boxes. The network node 1500 may be, for example, a base station 1002 or 1006 or another network node that implements all or part of the functionality of the base station 1002 or gNB described herein. As illustrated, the network node 1500 includes a control system 1502 that includes one or more processors 1504 (e.g., Central Processing Units (CPUs), Application Specific Integrated Circuits (ASICs), Field Programmable Gate Arrays (FPGAs), and/or the like), memory 1506, and a network interface 1508. The one or more processors 1504 are also referred to herein as processing circuitry. In addition, the network node 1500 may include one or more radio units 1510 that each includes one or more transmitters 1512 and one or more receivers 1514 coupled to one or more antennas 1516. The radio units 1510 may be referred to or be part of radio interface circuitry. In some embodiments, the radio unit(s) 1510 is external to the control system 1502 and connected to the control system 1502 via, e.g., a wired connection (e.g., an optical cable). However, in some other embodiments, the radio unit(s) 1510 and potentially the antenna(s) 1516 are integrated together with the control system 1502. The one or more processors 1504 operate to provide one or more functions of a network node 1500 as described herein. In some embodiments, the function(s) are implemented in software that is stored, e.g., in the memory 1506 and executed by the one or more processors 1504.

Figure 16 is a schematic block diagram that illustrates a virtualized embodiment of the network node 1500 according to some embodiments of the present disclosure. This discussion is equally applicable to radio access nodes and other types of network nodes. Further, other types of network nodes may have similar virtualized architectures. Again, optional features are represented by dashed boxes.

As used herein, a "virtualized" network node is an implementation of the network node 1500 in which at least a portion of the functionality of the network node 1500 is implemented as a virtual component(s) (e.g., via a virtual machine(s) executing on a physical processing node(s) in a network(s)). As illustrated, in this example, the network node 1500 may include the control system 1502 and/or the one or more radio units 1510, as described above. The control system 1502 may be connected to the radio unit(s) 1510 via, for example, an optical cable or the like. The network node 1500 includes one or more processing nodes 1600 coupled to or included as part of a network(s) 1602. If present, the control system 1502 or the radio unit(s) are connected to the processing node(s) 1600 via the network 1602. Each processing node 1600 includes one or more processors 1604 (e.g., CPUs, ASICs, FPGAs, and/or the like), memory 1606, and a network interface 1608.

In this example, functions 1610 of the network node 1500 described herein are implemented at the one or more processing nodes 1600 or distributed across the one or more processing nodes 1600 and the control system 1502 and/or the radio unit(s) 1510 in any desired manner. In some particular embodiments, some or all of the functions 1610 of the network node 1500 described herein are implemented as virtual components executed by one or more virtual machines implemented in a virtual environment(s) hosted by the processing node(s) 1600. As will be appreciated by one of ordinary skill in the art, additional signaling or communication between the processing node(s) 1600 and the control system 1502 is used in order to carry out at least some of the desired functions 1610. Notably, in some embodiments, the control system 1502 may not be included, in which case the radio unit(s) 1510 communicate directly with the processing node(s) 1600 via an appropriate network interface(s).

In some embodiments, a computer program including instructions which, when executed by at least one processor, causes the at least one processor to carry out the functionality of the network node 1500 or a node (e.g., a processing node 1600) implementing one or more of the functions 1610 of the network node 1500 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 17 is a schematic block diagram of the network node 1500 according to some other embodiments of the present disclosure. The network node 1500 includes one or more modules 1700, each of which is implemented in software. The module(s) 1700 provide the functionality of the network node 1500 described herein. This discussion is equally applicable to the processing node 1600 of Figure 16 where the modules 1700 may be implemented at one of the processing nodes 1600 or distributed across multiple processing nodes 1600 and/or distributed across the processing node(s) 1600 and the control system 1502.

Figure 18 is a schematic block diagram of a wireless communication device 1800 according to some embodiments of the present disclosure. As illustrated, the wireless communication device 1800 includes one or more processors 1802 (e.g., CPUs, ASICs, FPGAs, and/or the like), memory 1804, and one or more transceivers 1806 each including one or more transmitters 1808 and one or more receivers 1810 coupled to one or more antennas 1812. The transceiver(s) 1806 includes radio-front end circuitry connected to the antenna(s) 1812 that is configured to condition signals communicated between the antenna(s) 1812 and the processor(s) 1802, as will be appreciated by on of ordinary skill in the art. The processors 1802 are also referred to herein as processing circuitry. The transceivers 1806 are also referred to herein as radio circuitry. In some embodiments, the functionality of the wireless communication device 1800 described above may be fully or partially implemented in software that is, e.g., stored in the memory 1804 and executed by the processor(s) 1802. Note that the wireless communication device 1800 may include additional components not illustrated in Figure 18 such as, e.g., one or more user interface components (e.g., an input/output interface including a display, buttons, a touch screen, a microphone, a speaker(s), and/or the like and/or any other components for allowing input of information into the wireless communication device 1800 and/or allowing output of information from the wireless communication device 1800), a power supply (e.g., a battery and associated power circuitry), etc.

In some embodiments, a computer program including instructions which, when executed by at least one processor, causes the at least one processor to carry out the functionality of the wireless communication device 1800 according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 19 is a schematic block diagram of the wireless communication device 1800 according to some other embodiments of the present disclosure. The wireless communication device 1800 includes one or more modules 1900, each of which is implemented in software. The module(s) 1900 provide the functionality of the wireless communication device 1800 described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

**Claims**

1. A method performed by a wireless device (1012) for compactly configuring a Tracking Reference Signal, TRS, Information Element, IE, the method comprising:

   receiving (1304) a compact TRS IE from higher layer signaling of a network, wherein the compact TRS IE is received without a Channel State Information Reference Signal, CSI-RS, configuration, and wherein the compact TRS IE is received when the wireless device is in one of an idle mode or an inactive mode; and
   configuring (1306) at least one TRS in accordance with the compact TRS IE, wherein configuring the at least one TRS in accordance with the compact TRS IE comprises configuring a frequency location of TRS occasions within an initial bandwidth part, BWP, of the idle mode or the inactive mode.

2. The method of claim 1, wherein the compact TRS IE is available in idle/inactive mode or connected mode.

3. The method of any of claims 1 and 2, wherein the compact TRS IE is received through at least one of a System Information, SI, a Radio Resource Control, RRC, configuration, or a RRC release.

4. The method of any of claims 1 to 3, wherein configuring the at least one TRS in accordance with the compact TRS IE comprises configuring a frequency location of TRS occasions such that the TRS occasions are not restricted by an initial bandwidth part, BWP, of the idle mode or the inactive mode.

5. The method of any of claims 1 to 4 wherein configuring the at least one TRS in accordance with the compact TRS IE comprises configuring Quasi Co-Location, QCL, information for the at least one TRS from a higher layer *qcl-InfoPeriodicCSI-RS* configuration.

6. The method of any of claims 1 to 5, wherein configuring the at least one TRS in accordance with the compact TRS IE comprises configuring Quasi Co-Location, QCL, information for the at least one TRS based on an associated Synchronization Signal Block, SSB.

7. The method of any of claims 1 to 6, further comprising providing (1300) capability signaling indicating a capability of the wireless device to exploit the compact TRS IE.

8. The method of any of claims 1 to 7, further comprising providing (1302) compact TRS configuration assistance information, wherein providing (1302) the compact TRS configuration assistance information comprises: indicating a preference for parameters to be included in the compact TRS IE; and/or indicating at least one preferred compact TRS configuration.

9. The method of any of claims 1 to 8, further comprising deploying (1308) the at least one TRS for a measurement and/or tracking purpose.

10. The method of any of claims 1 to 9, wherein the compact TRS IE comprises the following parameters: *powerControlOffsetSS, scramblingID, firstOFDMSymbolInTimeDomain, startingRB,* and *nrofRBs,* optionally wherein the compact TRS IE comprises one or more of the following parameters: *periodicityAndOffset, aperiodicTriggeringOffset* or *qcl-InfoPeriodicCSI-RS.*

11. The method of any of claims 1 to 10, wherein the compact TRS IE omits one or more of the following parameters: *bwp-Id, resourceType, repetition, aperiodicTriggeringOffset, trs-Info, powerControlOffset, frequencyDomainAllocation, nrofPorts, firstOFDMSymbolInTimeDomain2, cdm-Type,* or *density.*

12. The method of any of claims 1 to 11, wherein the compact TRS IE omits each of the following parameters: *bwp-Id, resourceType, repetition, trs-Info, powerControlOffset, frequencyDomainAllocation, nrofPorts, firstOFDMSymbolInTimeDomain2, cdm-Type,* and *density.*

13. The method of any of claims 1 to 12, wherein the compact TRS IE comprises a *TRS-Config* IE, and/or wherein the compact TRS IE comprises a *CSI-RS-for-tracking-Resource* IE.

14. A wireless device for compactly configuring a Tracking Reference Signal, TRS, the wireless device comprising: processing circuitry configured to perform any of the steps of any of claims 1 to 13.

**15.** A method comprising:

performing by a wireless device (1012), a method according to any of claims 1 to 13; and
performing by a network node (1500) steps for providing a compact TRS configuration comprising:

determining (1404) at least one TRS configuration for a wireless device (1012); and
providing (1406) the compact TRS Information Element, IE, to the wireless device (1012) in accordance with the at least one TRS configuration, wherein the compact TRS IE is provided without providing a Channel State Information Reference Signal, CSI-RS, configuration.

**Patentansprüche**

**1.** Verfahren, das von einer drahtlosen Vorrichtung (1012) durchgeführt wird, zur kompakten Konfiguration eines Verfolgungsreferenzsignal-Informationselements, TRS-IE, wobei das Verfahren umfasst:

Empfangen (1304) eines kompakten TRS-IE von einer Signalisierung höherer Schichten eines Netzwerks, wobei das TRS-IE ohne eine Kanalzustandsinformations-Referenzsignalkonfiguration, CSI-RS-Konfiguration, empfangen wird und wobei das kompakte TRS-IE empfangen wird, wenn die drahtlose Vorrichtung in einem von einem Ruhemodus oder einem inaktiven Modus ist; und
Konfigurieren (1306) mindestens eines TRS in Übereinstimmung mit dem kompakten TRS-IE, wobei das Konfigurieren des mindestens einen TRS in Übereinstimmung mit dem kompakten TRS-IE ein Konfigurieren einer Frequenzposition von TRS-Gelegenheiten innerhalb eines anfänglichen Bandbreitenteils, BWP, des Ruhemodus oder des inaktiven Modus umfasst.

**2.** Verfahren nach Anspruch 1, wobei das kompakte-TRS-IE im Ruhe-/inaktiven Modus oder verbundenen Modus verfügbar ist.

**3.** Verfahren nach einem der Ansprüche 1 und 2, wobei das kompakte TRS-IE über mindestens eines von Systeminformationen, SI, einer Funkressourcensteuerungskonfiguration, RRC-Konfiguration, oder einer RRC-Freigabe empfangen wird.

**4.** Verfahren nach einem der Ansprüche 1 bis 3, wobei das Konfigurieren des mindestens einen TRS in Übereinstimmung mit dem kompakten TRS-IE ein derartiges Konfigurieren einer Frequenzposition von TRS-Gelegenheiten umfasst, dass die TRS-Gelegenheiten nicht durch einen anfänglichen Bandbreitenteil, BWP, des Ruhemodus oder des inaktiven Modus eingeschränkt werden.

**5.** Verfahren nach einem der Ansprüche 1 bis 4, wobei das Konfigurieren des mindestens einen TRS in Übereinstimmung mit dem kompakten TRS-IE ein Konfigurieren von Quasi-Ortsgleichheitsinformationen, QCL-Informationen, für das mindestens eine TRS aus einer *qcl-InfoPeriodicCSI-RS*-Konfiguration der höheren Schichten umfasst.

**6.** Verfahren nach einem der Ansprüche 1 bis 5, wobei das Konfigurieren des mindestens einen TRS in Übereinstimmung mit dem kompakten TRS-IE ein Konfigurieren von Quasi-Ortsgleichheitsinformationen, QCL-Informationen, für das mindestens eine TRS basierend auf einem zugehörigen Synchronisationssignalblocks, SSB, umfasst.

**7.** Verfahren nach einem Ansprüche 1 bis 6, ferner umfassend ein Bereitstellen (1300) von Fähigkeitsinformationen, die eine Fähigkeit der drahtlosen Vorrichtung zur Nutzung des kompakten TRS-IE angeben.

**8.** Verfahren nach einem Ansprüche 1 bis 7, ferner umfassend ein Bereitstellen (1302) von Hilfsinformationen für die kompakte TRS-Konfiguration, wobei das Bereitstellen (1302) der Hilfsinformationen für die kompakte TRS-Konfiguration Folgendes umfasst: Angeben einer Präferenz für Parameter, die in das kompakte TRS-IE aufgenommen werden sollen; und/oder Angeben mindestens einer bevorzugten kompakten TRS-Konfiguration.

**9.** Verfahren nach einem Ansprüche 1 bis 8, ferner umfassend ein Bereitstellen (1308) des mindestens einen TRS zu Mess- und/oder Verfolgungszwecken.

**10.** Verfahren nach einem der Ansprüche 1 bis 9, wobei das kompakte TRS-IE die folgenden Parameter umfasst: *powerControlOffsetSS, scramblingID, firstOFDMSymbolInTimeDomain, startingRB* und *nrofRBs,* wobei optional das TRS-IE einen oder mehrere der folgenden Parameter umfasst: *periodicityAndOffset, aperiodicTriggeringOffset* oder *qcl-InfoPeriodicCSI-RS.*

11. Verfahren nach einem der Ansprüche 1 bis 10, wobei das kompakte TRS-IE einen oder mehrere der folgenden Parameter weglässt: *bwp-Id, resourceType, repetition, aperiodicTriggeringOffset, trs-Info, powerControlOffset, frequencyDomainAllocation, nrofPorts, firstOFDMSymbolInTimeDomain2, cdm-Type* oder *density.*

12. Verfahren nach einem der Ansprüche 1 bis 11, wobei das kompakte TRS-IE jeden der folgenden Parameter weglässt: *bwp-Id, resourceType, repetition, trs-Info, powerControlOffset, frequencyDomainAllocation, nrofPorts, firstOFDMSymbolInTimeDomain2, cdm-Type* und *density.*

13. Anordnung nach einem der Ansprüche 1 bis 12, wobei das kompakte TRS-IE ein *TRS-Config*-IE umfasst und/oder wobei das kompakte TRS-IE ein *CSI-RS-for-tracking-Resource*-IE umfasst.

14. Drahtlose Vorrichtung zum kompakten Konfigurieren eines Verfolgungsreferenzsignals, TRS, wobei die drahtlose Vorrichtung umfasst: Verarbeitungsschaltungsanordnung, die zum Ausführen eines der Schritte nach einem Ansprüche 1 bis 13 konfiguriert ist.

15. Verfahren, umfassend:

Durchführen eines Verfahrens nach einem der Ansprüche 1 bis 13 durch eine drahtlose Vorrichtung (1012); und Ausführen von Schritten durch einen Netzwerkknoten (1500) zum Bereitstellen einer kompakten TRS-Konfiguration, umfassend:

Bestimmen (1404) mindestens einer TRS-Konfiguration für eine drahtlose Vorrichtung (1012); und Bereitstellen (1406) des kompakten TRS-Informationselements, IE, für die drahtlose Vorrichtung (1012) in Übereinstimmung mit der mindestens einen TRS-Konfiguration, wobei das kompakte TRS-IE ohne Bereitstellung einer Kanalzustandsinformations-Referenzsignalkonfiguration, CSI-RS-Konfiguration, bereitgestellt wird.

**Revendications**

1. Procédé réalisé par un dispositif sans fil (1012) pour la configuration compacte d'un élément d'information, IE, de signal de référence de suivi, TRS, le procédé comprenant :

la réception (1304) d'un IE TRS compact depuis une signalisation de couche supérieure d'un réseau, dans lequel l'IE TRS compact est reçu sans aucune configuration de signal de référence d'information d'état de canal, CSI-RS, et dans lequel l'IE TRS compact est reçu lorsque le dispositif sans fil est dans un mode de veille ou dans un mode inactif ; et
la configuration (1306) d'au moins un TRS en fonction de l'IE TRS compact, dans lequel la configuration de l'au moins un TRS en fonction de l'IE TRS compact comprend la configuration d'un emplacement de fréquence d'occasions de TRS à l'intérieur d'une partie de bande passante initiale, BWP, du mode de veille ou du mode inactif.

2. Procédé selon la revendication 1, dans lequel l'IE TRS compact est disponible en mode de veille/inactif ou en mode connecté.

3. Procédé selon l'une quelconque des revendications 1 et 2, dans lequel l'IE TRS compact est reçu par l'intermédiaire d'au moins l'une parmi une information système, SI, une configuration de commande de ressources radio, RRC, et une libération de RRC.

4. Procédé selon l'une quelconque des revendications 1 à 3, dans lequel la configuration de l'au moins un TRS en fonction de l'IE TRS compact comprend la configuration d'un emplacement de fréquence d'occasions de TRS de sorte que les occasions de TRS ne soient pas restreintes par une partie de bande passante, BWP, initiale du mode de veille ou du mode inactif.

5. Procédé selon l'une quelconque des revendications 1 à 4, dans lequel la configuration de l'au moins un TRS en fonction de l'IE TRS compact comprend la configuration d'une information de quasi-colocalisation, QCL, pour l'au moins un TRS à partir d'une configuration *qcl-InfoPeriodicCSI-RS* de couche supérieure.

6. Procédé selon l'une quelconque des revendications 1 à 5, dans lequel la configuration de l'au moins un TRS en fonction de l'IE TRS compact comprend la configuration d'une information de quasi-colocalisation, QCL, pour l'au moins un TRS sur la base d'un bloc de signal de synchronisation, SSB, associé.

7. Procédé selon l'une quelconque des revendications 1 à 6, comprenant en outre la fourniture (1300) d'une signalisation de capacité indiquant une capacité du dispositif sans fil à exploiter l'IE TRS compact.

8. Procédé selon l'une quelconque des revendications 1 à 7, comprenant en outre la fourniture (1302) d'une information d'assistance à la configuration de TRS compact, dans lequel la fourniture (1302) de l'information d'assistance à la configuration de TRS compact comprend : l'indication d'une préférence pour des paramètres à inclure dans l'IE TRS compact ; et/ou l'indication d'au moins une configuration de TRS compact préférée.

9. Procédé selon l'une quelconque des revendications 1 à 8, comprenant en outre le déploiement (1308) de l'au moins un TRS à des fins de mesure et/ou de suivi.

10. Procédé selon l'une quelconque des revendications 1 à 9, dans lequel l'IE TRS compact comprend les paramètres suivants : *powerControlOffsetSS, scramblingID, firstOFDMSymbolInTimeDomain, startingRB* et *nrofRBs,* facultativement dans lequel l'IE TRS compact comprend un ou plusieurs des paramètres suivants : *periodicityAndOffset, aperiodicTriggeringOffset* et *qcl-InfoPeriodicCSI-RS.*

11. Procédé selon l'une quelconque des revendications 1 à 10, dans lequel l'IE TRS compact omet un ou plusieurs des paramètres suivants : *bwp-Id, resourceType, repetition, aperiodicTriggeringOffset, trs-Info, powerControlOffset, frequencyDomainAllocation, nrofPorts, firstOFDMSymbolInTimeDomain2, cdm-Type,* et *density.*

12. Procédé selon l'une quelconque des revendications 1 à 11, dans lequel l'IE TRS compact omet chacun des paramètres suivants : *bwp-Id, resourceType, repetition, trs-Info, powerControlOffset, frequencyDomainAllocation, nrofPorts, firstOFDMSymbolInTimeDomain2, cdm-Type,* et *density.*

13. Procédé selon l'une quelconque des revendications 1 à 12, dans lequel l'IE TRS compact comprend un IE *TRS-Config,* et/ou dans lequel l'IE TRS compact comprend un IE *CSI-RS-for-tracking-Resource.*

14. Dispositif sans fil pour la configuration compacte d'un signal de référence de suivi, TRS, le dispositif sans fil comprenant :
une circuiterie de traitement configurée pour réaliser l'une quelconque des étapes selon l'une quelconque des revendications 1 à 13.

15. Procédé comprenant :

la réalisation, par un dispositif sans fil (1012), d'un procédé selon l'une quelconque des revendications 1 à 13 ; et
la réalisation, par un nœud de réseau (1500), d'étapes pour fournir une configuration de TRS compact comprenant :

la détermination (1404) d'au moins une configuration de TRS pour un dispositif sans fil (1012) ; et
la fourniture (1406) de l'élément d'information, IE, de TRS compact au dispositif sans fil (1012) en fonction de l'au moins une configuration de TRS, dans lequel l'IE de TRS compact est fourni sans fournir aucune configuration de signal de référence d'information d'état de canal, CSI-RS.

**NZP-CSI-RS-Resource Information Element**

```
-- ASN1START
-- TAG-NZP-CSI-RS-RESOURCE-START

NZP-CSI-RS-Resource ::=          SEQUENCE {
    nzp-CSI-RS-ResourceId         NZP-CSI-RS-ResourceId,
    resourceMapping               CSI-RS-ResourceMapping,
    powerControlOffset            INTEGER (-8..15),
    powerControlOffsetSS          ENUMERATED{db-3, db0, db3, db6}        OPTIONAL, -- Need R
    scramblingID                  ScramblingId,
    periodicityAndOffset          CSI-ResourcePeriodicityAndOffset      OPTIONAL, -- Cond PeriodicOrSemiPersistent
    qcl-InfoPeriodicCSI-RS        TCI-StateId                           OPTIONAL, -- Cond Periodic
    ...
}

-- TAG-NZP-CSI-RS-RESOURCE-STOP
-- ASN1STOP
```

*FIG. 1*

## *NZP-CSI-RS-ResourceId* Information Element

```
-- ASN1START
-- TAG-NZP-CSI-RS-RESOURCEID-START

NZP-CSI-RS-ResourceId ::=            INTEGER (0..maxNrofNZP-CSI-RS-Resources-1)

-- TAG-NZP-CSI-RS-RESOURCEID-STOP
-- ASN1STOP
```

*FIG. 2*

EP 4 133 663 B1

**NZP-CSI-RS-ResourceSet Information Element**

```
-- ASN1START
-- TAG-NZP-CSI-RS-RESOURCESET-START
NZP-CSI-RS-ResourceSet ::=   SEQUENCE {
    nzp-CSI-ResourceSetId        NZP-CSI-RS-ResourceSetId,
    nzp-CSI-RS-Resources         SEQUENCE (SIZE (1..maxNrofNZP-CSI-RS-ResourcesPerSet)) OF NZP-CSI-RS-ResourceId,
    repetition                   ENUMERATED { on, off }       OPTIONAL,    -- Need S
    aperiodicTriggeringOffset    INTEGER(0..6)                OPTIONAL,    -- Need S
    trs-Info                     ENUMERATED {true}            OPTIONAL,    -- Need R
    ...
}

-- TAG-NZP-CSI-RS-RESOURCESET-STOP
-- ASN1STOP
```

*FIG. 3*

**NZP-CSI-RS-ResourceSetId Information Element**

```
-- ASN1START
-- TAG-NZP-CSI-RS-RESOURCESETID-START

NZP-CSI-RS-ResourceSetId ::=          INTEGER (0..maxNrofNZP-CSI-RS-ResourceSets-1)

-- TAG-NZP-CSI-RS-RESOURCESETID-STOP
```

*FIG. 4*

**CSI-ResourceConfig Information Element**

```
-- ASN1START
-- TAG-CSI-RESOURCECONFIG-START

CSI-ResourceConfig ::=      SEQUENCE {
    csi-ResourceConfigId      CSI-ResourceConfigId,
    csi-RS-ResourceSetList    CHOICE {
        nzp-CSI-RS-SSB              SEQUENCE {
            nzp-CSI-RS-ResourceSetList SEQUENCE (SIZE (1..maxNrofNZP-CSI-RS-ResourceSetsPerConfig)) OF NZP-CSI-
RS-ResourceSetId        OPTIONAL, -- Need R
            csi-SSB-ResourceSetList    SEQUENCE (SIZE (1..maxNrofCSI-SSB-ResourceSetsPerConfig)) OF CSI-SSB-
ResourceSetId          OPTIONAL  -- Need R
        },
        csi-IM-ResourceSetList     SEQUENCE (SIZE (1..maxNrofCSI-IM-ResourceSetsPerConfig)) OF CSI-IM-
ResourceSetId
    },

    bwp-Id                      BWP-Id,
    resourceType                ENUMERATED { aperiodic, semiPersistent, periodic },
    ...
}

-- TAG-CSI-RESOURCECONFIG-STOP
-- ASN1STOP
```

**FIG. 5**

EP 4 133 663 B1

**CSI-ResourceConfigId Information Element**

```
-- ASN1START
-- TAG-CSI-RESOURCECONFIGID-START

CSI-ResourceConfigId ::=             INTEGER (0..maxNrofCSI-ResourceConfigurations-1)

-- TAG-CSI-RESOURCECONFIGID-STOP
-- ASN1STOP
```

## FIG. 6

**CSI-ResourcePeriodicityAndOffset Information Element**

```
-- ASN1START
-- TAG-CSI-RESOURCEPERIODICITYANDOFFSET-START

CSI-ResourcePeriodicityAndOffset ::=      CHOICE {
    slots4                                INTEGER (0..3),
    slots5                                INTEGER (0..4),
    slots8                                INTEGER (0..7),
    slots10                               INTEGER (0..9),
    slots16                               INTEGER (0..15),
    slots20                               INTEGER (0..19),
    slots32                               INTEGER (0..31),
    slots40                               INTEGER (0..39),
    slots64                               INTEGER (0..63),
    slots80                               INTEGER (0..79),
    slots160                              INTEGER (0..159),
    slots320                              INTEGER (0..319),
    slots640                              INTEGER (0..639)
}

-- TAG-CSI-RESOURCEPERIODICITYANDOFFSET-STOP
-- ASN1STOP
```

*FIG. 7*

**CSI-RS-ResourceMapping Information Element**

```
-- ASN1START
-- TAG-CSI-RS-RESOURCEMAPPING-START

CSI-RS-ResourceMapping ::=          SEQUENCE {
    frequencyDomainAllocation       CHOICE {
        row1                            BIT STRING (SIZE (4)),
        row2                            BIT STRING (SIZE (12)),
        row4                            BIT STRING (SIZE (3)),
        other                           BIT STRING (SIZE (6))
    },
    nrofPorts                       ENUMERATED {p1,p2,p4,p8,p12,p16,p24,p32},
    firstOFDMSymbolInTimeDomain     INTEGER (0..13),
    firstOFDMSymbolInTimeDomain2    INTEGER (2..12)                                      OPTIONAL, -- Need R
    cdm-Type                        ENUMERATED {noCDM, fd-CDM2, cdm4-FD2-TD2, cdm8-FD2-TD4},
    density                         CHOICE {
        dot5                            ENUMERATED {evenPRBs, oddPRBs},
        one                             NULL,
        three                           NULL,
        spare                           NULL
    },
    freqBand                        CSI-FrequencyOccupation,
    ...
}

-- TAG-CSI-RS-RESOURCEMAPPING-STOP
-- ASN1STOP
```

*FIG. 8*

### CSI-FrequencyOccupation Information Element

```
-- ASN1START
-- TAG-CSI-FREQUENCYOCCUPATION-START

CSI-FrequencyOccupation ::=        SEQUENCE {
    startingRB                         INTEGER (0..maxNrofPhysicalResourceBlocks-1),
    nrofRBs                            INTEGER (24..maxNrofPhysicalResourceBlocksPlus1),
    ...
}

-- TAG-CSI-FREQUENCYOCCUPATION-STOP
-- ASN1STOP
```

*FIG. 9*

**FIG. 10**

**TRS-Config Information Element**

```
-- ASN1START
-- TAG-TRS-CONFIG-START

TRS-Config ::=                  SEQUENCE {
    bwp-Id                      BWP-Id,                                              OPTIONAL,   -- Need S
    aperiodicTriggeringOffset        INTEGER(0..6),
    firstOFDMSymbolInTimeDomain      INTEGER (0..9),
    freqBand          SEQUENCE {
        startingRB                       INTEGER (0..maxNrofPhysicalResourceBlocks-1),
        nrofRBs                          INTEGER (24..maxNrofPhysicalResourceBlocksPlus1),
    ...
}
OPTIONAL,
        powerControlOffsetSS             ENUMERATED{db-3, db0, db3, db6}      OPTIONAL,   -- Need R
    scramblingID                     ScramblingId,                           OPTIONAL,
    periodicityAndOffset::=
        slots10                          INTEGER (0..9),
        slots20                          INTEGER (0..19),
        slots40                          INTEGER (0..39),
        slots80                          INTEGER (0..79),
        slots160                         INTEGER (0..159),
        slots320                         INTEGER (0..319),
        slots640                         INTEGER (0..639)
}
    qcl-InfoPeriodicCSI-RS       CHOICE {TCI-StateId, SSB-Index}             OPTIONAL,   -- Cond Periodic
    RRC-state ENUMERATED {Connected, Idle, Inactive}
...
}

-- TAG- TRS-CONFIG-STOP
-- ASN1STOP
```

**FIG. 11**

## TRS-Config Information Element

```
-- ASN1START
-- TAG-TRS-CONFIG-START

TRS-Config ::=                 SEQUENCE {
    firstOFDMSymbolInTimeDomain        INTEGER (0..9),
    freqBand            SEQUENCE {
        startingRB                     INTEGER (0..maxNrofPhysicalResourceBlocks-1),
        nrofRBs                        INTEGER (24..maxNrofPhysicalResourceBlocksPlus1),
        ...
}
OPTIONAL,
        powerControlOffsetSS           ENUMERATED{db-3, db3, db6}
DEFAULT db0,
    periodicityAndOffset::=
        slots10                        INTEGER (0..9),
        slots20                        INTEGER (0..19),
        slots40                        INTEGER (0..39),
        slots80                        INTEGER (0..79),
        slots160                       INTEGER (0..159),
        slots320                       INTEGER (0..319),
        slots640                       INTEGER (0..639)
}
    qcl-InfoPeriodicCSI-RS         SSB-Index,
...
}

-- TAG- TRS-CONFIG-STOP
-- ASN1STOP
```

EP 4 133 663 B1

*FIG. 12*

PROVIDE CAPABILITY SIGNALING INDICATING A CAPABILITY OF
THE WIRELESS DEVICE TO EXPLOIT A COMPACT TRS IE
1300

PROVIDE COMPACT TRS CONFIGURATION ASSISTANCE
INFORMATION
1302

RECEIVE THE COMPACT TRS IE FROM A NETWORK
1304

CONFIGURE AT LEAST ONE TRS IN ACCORDANCE WITH THE
COMPACT TRS IE
1306

DEPLOY THE AT LEAST ONE TRS FOR A MEASUREMENT AND/OR
TRACKING PURPOSE
1308

*FIG. 13*

RECEIVE CAPABILITY SIGNALING INDICATING A CAPABILITY OF A
WIRELESS DEVICE TO EXPLOIT A COMPACT TRS IE
1400

RECEIVE COMPACT TRS CONFIGURATION ASSISTANCE
INFORMATION
1402

DETERMINE AT LEAST ONE TRS CONFIGURATION FOR THE
WIRELESS DEVICE
1404

PROVIDE THE COMPACT TRS IE TO THE WIRELESS DEVICE IN
ACCORDANCE WITH THE AT LEAST ONE TRS CONFIGURATION
1406

*FIG. 14*

1500

1516

CONTROL SYSTEM
1502

NETWORK
INTERFACE
1508

PROCESSOR(S)
1504

RADIO UNIT(S)
1510

1516

TX(S) 1512

MEMORY
1506

RX(S) 1514

**FIG. 15**

RADIO ACCESS NODE
1500

MODULE(S)
1700

**FIG. 17**

35

**FIG. 16**

1800

1812

TRANSCEIVER(S)
1806

1812

MEMORY
1804

PROCESSOR(S)
1802

TX(S) 1808

RX(S) 1810

**FIG. 18**

UE
1800

MODULE(S)
1900

**FIG. 19**

## REFERENCES CITED IN THE DESCRIPTION

### Patent documents cited in the description

- US 63008383
- CN 110690947
- US 2018234197 A

### Non-patent literature cited in the description

- **SPREADTRUM COMMUNICATIONS.** Remaining issues on TRS. *3GPP DRAFT; R1-1717747_REMAINING ISSUES ON TRS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE,* 02 October 2017, vol. RAN WG1 (Prague, CZ